(19) Europäisches Patentamt
European Patent Office
Office européen des brevets

(11) EP 2 613 318 B1

(12) **EUROPÄISCHE PATENTSCHRIFT**

(45) Veröffentlichungstag und Bekanntmachung des Hinweises auf die Patenterteilung:
**30.07.2014 Patentblatt 2014/31**

(51) Int Cl.:
***G11B 7/245*** (2006.01) ***G11B 7/24*** (2013.01)

(21) Anmeldenummer: **12150275.1**

(22) Anmeldetag: **05.01.2012**

(54) **Schichtaufbau mit einer Schutzschicht und einer belichteten Photopolymerschicht**

Layer construction with a protective coating and an exposed photopolymer layer

Montage de couche doté d'une couche de protection et d'une couche de photopolymère éclairée

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**10.07.2013 Patentblatt 2013/28**

(73) Patentinhaber: **Bayer Intellectual Property GmbH**
**40789 Monheim (DE)**

(72) Erfinder:
- **Fäcke, Thomas**
  **51375 Leverkusen (DE)**
- **Bruder, Friedrich-Karl**
  **47802 Krefeld (DE)**
- **Rölle, Thomas**
  **51381 Leverkusen (DE)**
- **Weiser, Marc-Stephan**
  **51379 Leverkusen (DE)**
- **Hönel, Dennis**
  **53909 Zülpich-Wichterich (DE)**
- **Berneth, Horst**
  **51373 Leverkusen (DE)**
- **Flemm, Ute**
  **42697 Solingen (DE)**

(74) Vertreter: **BIP Patents**
**c/o Bayer Intellectual Property GmbH**
**Creative Campus Monheim**
**Alfred-Nobel-Straße 10**
**40789 Monheim (DE)**

(56) Entgegenhaltungen:
**JP-A- 2007 118 467**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 613 318 B1

Printed by Jouve, 75001 PARIS (FR)

## Beschreibung

Die vorliegende Erfindung betrifft einen Schichtaufbau mit einer Schutzschicht und einer belichteten Photopolymerschicht sowie ein Verfahren zur Herstellung des Schichtaufbaus. Photopolymerschichten der eingangs genannten Art zur Herstellung holographischer Medien sind aus der WO 2011/054797 und der WO 2011/067057 bekannt. Vorteile dieser holografischen Medien ist deren hohe diffraktive Lichtbeugungseffizienz und das keine Nachprozessierungsschritte nach der holografischen Belichtung wie z.B. chemische oder thermische Entwicklungschritte nötig sind.

In der DE 699 37 920 T2 ist beschrieben, dass holografische Photopolymerschichten ihre Farbe verändern können, wenn aus angrenzenden Schichten wie Klebstoffschichten Substanzen in die Photopolymerschicht einquellen oder aus dieser in die angrenzende Schicht ausbluten. Tritt eines der beiden Phänomene auf, kann es zu einer Volumenexpansion oder einem Volumenschrumpf in der Photopolymerschicht kommen. Dies führt wiederum zu einer langwelligen bzw. kurzwelligen Farbverschiebung des Holograms. Insbesondere bei Mehrfarbhologrammen bewirkt dies unerwünschte visuelle Farbänderungen.

Um Volumenänderungen und die damit einhergehenden Farbveränderungen zu vermeiden, lehrt DE 699 37 920 T2 den angrenzenden Schichten und/oder der Photopolymerschicht vorab hinreichende Mengen der einquellenden oder ausblutenden Substanzen zuzusetzen. Dieses Verfahren ist jedoch aufwendig. Darüber hinaus muss je nachdem, welches Material für die angrenzende Schicht verwendet werden soll, eine Anpassung vorgenommen werden. Zuletzt muss die zugesetzte Substanz auch so gewählt werden, dass sie die Photopolymerschicht nicht zerstört.

Aufgabe der vorliegenden Erfindung war es daher einen Schichtaufbau mit einer Schutzschicht und einer belichteten Photopolymerschicht bereit zu stellen, der auf einfache Weise hergestellt und mit unterschiedlichsten angrenzenden Schichten wie z.B. Klebstoffschichten fest verbunden werden kann, ohne das es zu einer Volumenänderungen der Photopolymerschicht und einer damit einhergehenden Farbveränderungen des Hologramms kommt.

Diese Aufgabe ist durch einen Schichtaufbau mit einer Schutzschicht und einer belichteten Photopolymerschicht gelöst, bei dem die Schutzschicht durch Umsetzung wenigstens eines strahlungshärtenden Harzes I), eines Isocyanatfunktionellen Harzes II) und eines Photoinitiatorsystem III) erhältlich ist und in dem strahlenhärtenden Harz I) $\leq$ 5 Gew.-% Verbindungen mit einem gewichtsmittleren Molekulargewicht < 500 und $\geq$ 75 Gew.-% Verbindungen mit einem gewichtsmittleren Molekulargewicht > 1000 enthalten sind, in dem Isocyanatfunktionellen Harz II) $\leq$ 5 Gew.-% Verbindungen mit einem gewichtsmittleren Molekular gewicht < 500 enthalten sind und in der Schutzschicht mindestens zu 80 Gew.-% das strahlenhärtende Harze I) und maximal zu 15 Gew.-% das isocyanatfunktionelle Harze II) enthalten sind.

## Beschreibung der Photopolymerschicht

Gemäß einer bevorzugten Ausführungsform enthält die Photopolymerschicht vernetzte Matrixpolymere A), die durch Umsetzung wenigstens einer Polyisocyanat-Komponente a) und einer Isocyanat reaktiven-Komponente b) erhältlich sind, vernetzte Schreibmonomere B), einen Photoinitiator C) und einen Katalysator D).

Als Polyisocyanat-Komponente a) können alle dem Fachmann an sich gut bekannten Verbindungen oder deren Mischungen eingesetzt werden, die im Mittel zwei oder mehr NCO-Funktionen pro Molekül aufweisen. Diese können auf aromatischer, araliphatischer, aliphatischer oder cycloaliphatischer Basis sein. In untergeordneten Mengen können auch Monoisocyanate und/oder ungesättigte Gruppen enthaltende Polyisocyanate mit verwendet werden.

Beispielsweise geeignet sind Butylendiisocyanat, Hexamethylendiisocyanat (HDI), Isophorondiisocyanat (IPDI), 1,8-Diisocyanato-4-(isocyanatomethyl)-octan, 2,2,4- und/oder 2,4,4-Trimethylhexamethylendiisocyanat, die isomeren Bis-(4,4'-isocyanatocyclohexyl)-methan und deren Mischungen beliebigen Isomerengehalts, Isocyanatomethyl-1,8-octandiisocyanat, 1,4-Cyclohexylendiisocyanat, die isomeren Cyclohexandimethylendiisocyanate, 1,4-Phenylendiisocyanat, 2,4- und/oder 2,6-Toluylendiisocyanat, 1,5-Naphthylendiisocyanat, 2,4'- oder 4,4'-Diphenylmethandiisocyanat und/oder Triphenylmethan-4,4',4"-triisocyanat.

Ebenfalls möglich ist der Einsatz von Derivaten monomerer Di- oder Triisocyanate mit Urethan-, Harnstoff-, Carbodiimid-, Acylharnstoff-, Isocyanurat-, Allophanat-, Biuret-, Oxadiazintrion-, Uretdion- und/oder Iminooxadiazindionstrukturen.

Bevorzugt ist der Einsatz von Polyisocyanaten auf Basis aliphatischer und/oder cycloaliphatischer Di- oder Triisocyanate.

Besonders bevorzugt handelt es sich bei den Polyisocyanaten der Komponente a) um di- oder oligomerisierte aliphatische und/oder cycloaliphatische Di- oder Triisocyanate.

Ganz besonders bevorzugt sind Isocyanurate, Uretdione und/oder Iminooxadiazindione basierend auf HDI, 1,8-Diisocyanato-4-(isocyanatomethyl)-octan oder deren Mischungen. Ebenfalls können als Komponente a) NCO-funktionelle Prepolymere mit Urethan-, Allophanat-, Biuret- und/oder Amidgruppen eingesetzt werden. Prepolymere der Komponente a) werden in dem Fachmann an sich gut bekannter Art und Weise durch Umsetzung von monomeren, oligomeren oder Polyisocyanaten a1) mit isocyanatreaktiven Verbindungen a2) in geeigneter Stöchiometrie unter optionalem Einsatz von Katalysatoren und Lösemitteln erhalten.

Als Polyisocyanate a1) eignen sich alle dem Fachmann an sich bekannten aliphatischen, cycloaliphatischen, aromatischen oder araliphatischen Di- und Triisocyanate, wobei es unerheblich ist, ob diese mittels Phosgenierung oder nach phosgenfreien Verfahren erhalten wurden. Daneben können auch die diem Fachmann an sich gut bekannten höhermolekularen Folgeprodukte monomerer Di- und/oder Triisocyanate mit Urethan-, Harnstoff-, Carbodiimid-, Acylharnstoff-, Isocyanurat-, Allophanat-, Biuret-, Oxadiazintrion-, Uretdion-, Iminooxadiazindionstruktur jeweils einzeln oder in beliebigen Mischungen untereinander eingesetzt werden.

Beispiele für geeignete monomere Di- oder Triisocyanate, die als Komponente a1) eingesetzt werden können, sind Butylendiisocyanat, Hexamethylendiisocyanat (HDI), Isophorondiisocyanat (IPDI), Trimethyl-hexamethylen-diisocyanat (TMDI), 1,8-Diisocyanato-4-(isocyanatomethyl)-octan, Isocyanatomethyl-1,8-octandiisocyanat (TIN), 2,4- und/oder 2,6-Toluen-diisocyanat.

Als isocyanatreaktive Verbindungen a2) zum Aufbau der Prepolymere werden bevorzugt OH-funktionelle Verbindungen eingesetzt. Diese sind analog den OH-funktionellen Verbindungen wie sie nachfolgend für die Komponente b) beschrieben sind.

Ebenfalls möglich ist der Einsatz von Aminen zur Prepolymerherstellung. Beispielsweise geeignet sind Ethylendiamin, Diethylentriamin, Triethylentetramin, Propylendiamin, Diaminocyclohexan, Diaminobenzol, Diaminobisphenyl, difunktionelle Polyamine wie z.B. die Jeffamine®, aminterminierte Polymere mit zahlenmittleren Molmassen bis 10000 g/Mol oder deren beliebige Gemische untereinander.

Zur Herstellung von Biuretgruppen-haltigen Prepolymeren wird Isocyanat im Überschuss mit Amin umgesetzt, wobei eine Biuretgruppe entsteht. Als Amine eignen sich in diesem Falle für die Umsetzung mit den erwähnten Di-, Tri- und Polyisocyanaten alle oligomeren oder polymeren, primären oder sekundären, difunktionellen Amine der vorstehend genannten Art.

Bevorzugte Prepolymere sind Urethane, Allophanate oder Biurete aus aliphatischen Isocyanat-funktionellen Verbindungen und oligomeren oder polymeren Isocyanat-reaktiven Verbindungen mit zahlenmittleren Molmassen von 200 bis 10000 g/Mol, besonders bevorzugt sind Urethane, Allophanate oder Biurete aus aliphatischen Isocyanat-funktionellen Verbindungen und oligomeren oder polymeren Polyolen oder Polyaminen mit zahlenmittleren Molmassen von 500 bis 8500 g/Mol und ganz besonders bevorzugt sind Allophanate aus HDI oder TMDI und difunktionellen Polyetherpolyolen mit zahlenmittleren Molmassen von 1000 bis 8200 g/Mol.

Bevorzugt weisen die vorstehend beschriebenen Prepolymere Restgehalte an freiem monomeren Isocyanat von weniger als 1 Gew.-%, besonders bevorzugt weniger als 0.5 Gew.-% und ganz besonders bevorzugt weniger als 0.2 Gew.-% auf.

Selbstverständlich kann die Polyisocyanat-Komponente anteilsmäßig neben den beschriebenen Prepolymeren weitere Isocyanatkomponenten enthalten. Hierfür kommen aromatische, araliphatische, aliphatische und cycloaliphatische Di-, Tri- oder Polyisocyanate in Betracht. Es können auch Mischungen solcher Di-, Tri- oder Polyisocyanate eingesetzt werden. Beispiele geeigneter Di-, Tri- oder Polyisocyanate sind Butylendiisocyanat, Hexamethylendiisocyanat (HDI), Isophorondiisocyanat (IPDI), 1,8-Diisocyanato-4-(isocyanatomethyl)octan, 2,2,4- und/oder 2,4,4-Trimethylhexamethylendiisocyanat (TMDI), die isomeren Bis(4,4'-isocyanatocyclohexyl)methane und deren Mischungen beliebigen Isomerengehalts, Isocyanatomethyl-1,8-octandiisocyanat, 1,4-Cyclohexylendiisocyanat, die isomeren Cyclohexandimethylendiisocyanate, 1,4-Phenylendiisocyanat, 2,4- und/oder 2,6-Toluylendiisocyanat, 1,5-Naphthylendiisocyanat, 2,4'- oder 4,4'-Diphenylmethandiisocyanat, Triphenylmethan-4,4',4"-triisocyanat oder deren Derivate mit Urethan-, Harnstoff-, Carbodiimid-, Acylharnstoff-, Isocyanurat-, Allophanat-, Biuret-, Oxadiazintrion-, Uretdion-, Iminooxadiazindionstruktur und Mischungen derselben. Bevorzugt sind Polyisocyanate auf Basis oligomerisierter und/oder derivatisierter Diisocyanate, die durch geeignete Verfahren von überschüssigem Diisocyanat befreit wurden, insbesondere die des Hexamethylendiisocyanat. Besonders bevorzugt sind die oligomeren Isocyanurate, Uretdione und Iminooxadiazindione des HDI sowie deren Mischungen.

Es ist gegebenenfalls auch möglich, dass die Polyisocyanat-Komponente a) anteilsmäßig Isocyanate enthält, die teilweise mit isocyanat-reaktiven ethylenisch ungesättigten Verbindungen umgesetzt sind. Bevorzugt werden hierbei als isocyanat-reaktives ethylenisch ungesättigte Verbindungen $\alpha,\beta$-ungesättigte Carbonsäurederivate wie Acrylate, Methacrylate, Maleinate, Fumarate, Maleimide, Acrylamide, sowie Vinylether, Propenylether, Allylether und Dicyclopentadienyl-Einheiten enthaltende Verbindungen, die mindestens eine gegenüber Isocyanaten reaktive Gruppe aufweisen, eingesetzt. Besonders bevorzugt sind dies Acrylate und Methacrylate mit mindestens einer isocyanatreaktiven Gruppe. Als hydroxyfunktionelle Acrylate oder Methacrylate kommen beispielsweise Verbindungen wie 2-Hydroxyethyl(meth)acrylat, Polyethylenoxid-mono(meth)acrylate, Polypropylenoxidmono(meth)acrylate, Polyalkylenoxidmono(meth)acrylate, Poly($\varepsilon$-caprolacton)mono(meth)acrylate, wie z.B. Tone® M 1 0 0 (Dow, USA), 2-Hydroxypropyl(meth)acrylat, 4-Hydroxybutyl(meth)acrylat, 3-Hydroxy-2,2-dimethylpropyl(meth)acrylat, die hydroxyfunktionellen Mono-, Di- oder Tetra(meth)acrylate mehrwertiger Alkohole wie Trimethylolpropan, Glycerin, Pentaerythrit, Dipentaerythrit, ethoxyliertes, propoxyliertes oder alkoxyliertes Trimethylolpropan, Glycerin, Pentaerythrit, Dipentaerythrit oder deren technische Gemische in Betracht. Darüber hinaus sind isocyanat-reaktive oligomere oder polymere ungesättigte Acrylat- und/oder Methacrylatgruppen enthaltende Verbindungen alleine oder in Kombination mit den vorgenannten

monomeren Verbindungen geeignet. Der Anteil an Isocyanaten an der Isocyanatkomponente a), die teilweise mit isocyanat-reaktiven ethylenisch ungesättigten Verbindungen umgesetzt sind beträgt 0 bis 99 %, bevorzugt 0 bis 50 %, besonders bevorzugt 0 bis 25 % und ganz besonders bevorzugt 0 bis 15 %.

Es ist gegebenenfalls auch möglich, dass die vorgenannten Polyisocyanat-Komponente a) vollständig oder anteilsmäßig Isocyanate enthält, die ganz oder teilweise mit dem Fachmann aus der Beschichtungstechnologie bekannten Blockierungsmitteln umgesetzt sind. Als Beispiel für Blockierungsmittel seien genannt: Alkohole, Lactame, Oxime, Malonester, Alkylacetoacetate, Triazole, Phenole, Imidazole, Pyrazole sowie Amine, wie z.B. Butanonoxim, Diisopropylamin, 1,2,4-Triazol, Dimethyl-1,2,4-triazol, Imidazol, Malonsäurediethylester, Acetessigester, Acetonoxim, 3,5-Dimethylpyrazol, ε-Caprolactam, N-tert.-Butyl-benzylamin, Cyclopentanoncarboxyethylester oder beliebige Gemische dieser Blockierungsmittel.

Besonders bevorzugt ist, wenn die Polyisocyanat-Komponente ein aliphatisches Polyisocyanat oder ein aliphatisches Präpolymer und bevorzugt ein aliphatisches Polyisocyanat oder Präpolymer mit primären NCO-Gruppen ist.

Als Polyol-Komponente b) können an sich alle polyfunktionellen, isocyanatreaktiven Verbindungen eingesetzt werden, die im Mittel wenigstens 1.5 isocyanatreaktive Gruppen pro Molekül aufweisen.

Isocyanatreaktive Gruppen im Rahmen der vorliegenden Erfindung sind bevorzugt Hydroxy, Amino- oder Thiogruppen, besonders bevorzugt sind Hydroxyverbindungen.

Geeignete polyfunktionelle, isocyanatreaktive Verbindungen sind beispielsweise Polyester-, Polyether-, Polycarbonat-, Poly(meth)acrylat- und/oder Polyurethanpolyole.

Als Polyesterpolyole sind beispielsweise lineare Polyesterdiole oder verzweigte Polyesterpolyole geeignet, wie sie in bekannter Weise aus aliphatischen, cycloaliphatischen oder aromatischen Di- bzw. Polycarbonsäuren bzw. ihren Anhydriden mit mehrwertigen Alkoholen einer OH-Funktionalität ≥ 2 erhalten werden.

Beispiele für solche Di- bzw. Polycarbonsäuren bzw. Anhydride sind Bernstein-, Glutar-, Adipin-, Pimelin-, Kork-, Azelain-, Sebacin-, Nonandicarbon-, Decandicarbon-, Terephthal-, Isophthal-, o-Phthal-, Tetrahydrophthal-, Hexahydrophthal- oder Trimellitsäure sowie Säureanhydride wie o-Phthal-, Trimellit- oder Bernsteinsäureanhydrid oder deren beliebige Gemische untereinander.

Beispiele für geeignete Alkohole sind Ethandiol, Di-, Tri-, Tetraethylenglykol, 1,2-Propandiol, Di-, Tri-, Tetrapropylenglykol, 1,3-Propandiol, Butandiol-1,4, Butandiol-1,3, Butandiol-2,3, Pentandiol-1,5, Hexandiol-1,6, 2,2-Dimethyl-1,3-propandiol, 1,4-Dihydroxycyclohexan, 1,4-Dimethylolcyclohexan, Octandiol-1,8, Decandiol-1,10, Dodecandiol-1,12, Trimethylolpropan, Glycerin oder deren beliebige Gemische untereinander.

Die Polyesterpolyole können auch auf natürlichen Rohstoffen wie Rizinusöl basieren. Ebenfalls möglich ist, dass die Polyesterpolyole auf Homo- oder Mischpolymerisaten von Lactonen basieren, wie sie bevorzugt durch Anlagerung von Lactonen bzw. Lactongemischen wie Butyrolacton, ε-Caprolacton und/oder Methyl-ε-caprolacton an hydroxyfunktionelle Verbindungen wie mehrwertige Alkohole einer OH-Funktionalität ≥ 2 beispielsweise der vorstehend genannten Art erhalten werden können.

Solche Polyesterpolyole haben bevorzugt zahlenmittlere Molmassen von 400 bis 4000 g/Mol, besonders bevorzugt von 500 bis 2000 g/Mol. Ihre OH-Funktionalität beträgt bevorzugt 1.5 bis 3.5, besonders bevorzugt 1.8 bis 3.0.

Geeignete Polycarbonatpolyole sind in an sich bekannter Weise durch Umsetzung von organischen Carbonaten oder Phosgen mit Diolen oder Diol-Mischungen zugänglich.

Geeignete organische Carbonate sind Dimethyl-, Diethyl- und Diphenylcarbonat.

Geeignete Diole bzw. Mischungen umfassen die an sich im Rahmen der Polyestersegmente genannten mehrwertigen Alkoholen einer OH-Funktionalität ≥ 2, bevorzugt 1,4-Butandiol, 1,6-Hexandiol und/oder 3-Methylpentandiol, oder auch Polyesterpolyole können zu Polycarbonatpolyolen umgearbeitet werden.

Solche Polycarbonatpolyole haben bevorzugt zahlenmittlere Molmassen von 400 bis 4000 g/Mol, besonders bevorzugt von 500 bis 2000 g/Mol. Die OH-Funktionalität dieser Polyole beträgt bevorzugt 1.8 bis 3.2, besonders bevorzugt 1.9 bis 3.0.

Geeignete Polyetherpolyole sind gegebenenfalls blockweise aufgebaute Polyadditionsprodukte cyclischer Ether an OH- oder NH-funktionelle Startermoleküle.

Geeignete cyclische Ether sind beispielsweise Styroloxide, Ethylenoxid, Propylenoxid, Tetrahydrofuran, Butylenoxid, Epichlorhydrin, sowie ihre beliebigen Mischungen.

Als Starter können die an sich im Rahmen der Polyesterpolyole genannten mehrwertigen Alkohole einer OH-Funktionalität ≥ 2 sowie primäre oder sekundäre Amine und Aminoalkohole verwendet werden.

Bevorzugte Polyetherpolyole sind solche der vorgenannten Art ausschließlich basierend auf Propylenoxid oder statistische oder Block-Copolymere basierend auf Propylenoxid mit weiteren 1-Alkylenoxiden, wobei der 1-Alykenoxidanteil nicht höher als 80 Gew.-% ist. Besonders bevorzugt sind Propylenoxid-homopolymere sowie statistische oder Block-Copolymere, die Oxyethylen-, Oxypropylen- und/oder Oxybutyleneinheiten aufweisen, wobei der Anteil der Oxypropyleneinheiten bezogen auf die Gesamtmenge aller Oxyethylen-, Oxypropylen- und Oxybutyleneinheiten mindestens 20 Gew.-%, bevorzugt mindestens 45 Gew.-% ausmacht. Oxypropylen- und Oxybutylen umfasst hierbei alle jeweiligen linearen und verzweigten C3- und C4-Isomere.

Solche Polyetherpolyole haben bevorzugt zahlenmittlere Molmassen von 250 bis 10000 g/Mol, besonders bevorzugt von 500 bis 8500 g/Mol und ganz besonders bevorzugt von 600 bis 4500 g/Mol. Die OH-Funktionalität beträgt bevorzugt 1.5 bis 4.0, besonders bevorzugt 1.8 bis 3.1.

Als spezielle Polyetherpolyole werden bevorzugt solche eingesetzt, die aus einer isocyanatreaktiven Komponente umfassend hydroxyfunktionelle Multiblockcopolymere des Typs $Y(Xi\text{-}H)_n$ mit i = 1 bis 10 und n = 2 bis 8 und zahlenmittleren Molekulargewichten von größer 1500 g/Mol bestehen, wobei die Segmente $X_i$ jeweils aus Oxyalkyleneinheiten der Formel I aufgebaut sind,

-CH2-CH(R)-O- (I)

wobei R ein Wasserstoff-, Alkyl-, oder Arylrest, ist, der auch substituiert oder durch Heteroatome (wie Ethersauerstoffe) unterbrochen sein kann, Y der zugrundeliegende Starter ist und der Anteil der Segmente $X_i$ bezogen auf die Gesamtmenge der Segmente $X_i$ und Y wenigstens 50 Gew.-% ausmacht.

Die äußeren Blöcke $X_i$ machen dabei zumindest 50 Gew.-%, bevorzugt 66 Gew.-% der Gesamtmolmasse von $Y(X_i\text{-}H)_n$ aus und bestehen aus Monomereinheiten, die der Formel I gehorchen. Bevorzugt ist n in $Y(X_i\text{-}H)_n$ eine Zahl von 2 bis 6, besonders bevorzugt 2 oder 3 und ganz besonders bevorzugt gleich 2. Bevorzugt ist i in $Y(X_i\text{-}H)_n$ eine Zahl von 1 bis 6, besonders bevorzugt von 1 bis 3 und ganz besonders bevorzugt gleich 1.

In Formel I ist R bevorzugt ein Wasserstoff, eine Methyl-, Butyl-, Hexyl- oder Octylgruppe oder ein ethergruppenhaltiger Alkylrest. Bevorzugte ethergruppenhaltiger Alkylreste sind solche basierend auf Oxyalkyleneinheiten.

Die Multiblockcopolymere $Y(X_i\text{-}H)_n$ haben bevorzugt zahlenmittlere Molekulargewichte von mehr als 1200 g/Mol, besonders bevorzugt mehr als 1950 g/Mol, jedoch bevorzugt nicht mehr als 12000 g/Mol, besonders bevorzugt nicht mehr als 8000 g/Mol.

Die Blöcke $X_i$ können Homopolymere aus ausschließlich gleichen Oxyalkylen-Wiederholungseinheiten sein. Sie können auch statistisch aus verschiedenen Oxyalkyleneinheiten oder ihrerseits blockweise aus verschiedenen Oxyalkyleneinheiten aufgebaut sein.

Bevorzugte basieren die Segmente $X_i$ ausschließlich auf Propylenoxid oder statistischen oder blockweisen Mischungen von Propylenoxid mit weiteren 1-Alkylenoxiden, wobei der Anteil an weiteren 1-Alykenoxiden nicht höher als 80 Gew.-% ist.

Besonders bevorzugt sind als Segmente $X_i$ Propylenoxid-homopolymere sowie statistische oder Block-Copolymere, die Oxyethylen- und/oder Oxypropyleneinheiten, wobei der Anteil der Oxypropyleneinheiten bezogen auf die Gesamtmenge aller Oxyethylen- und Oxypropyleneinheiten mindestens 20 Gew.-%, bevorzugt mindestens 40 Gew.-% ausmacht.

Die Blöcke $X_i$ werden wie weiter unten beschrieben durch ringöffnende Polymerisation der vorstehend beschriebenen Alkylenoxide auf einen n-fach hydroxy- oder aminofunktionellen Starterblock $Y(H)_n$ aufaddiert.

Der innere Block Y, der zu kleiner 50 Gew.-%, bevorzugt aus kleiner 34 Gew.-% in $Y(Xi\text{-}H)_n$ enthalten ist, besteht aus di- und/oder höher hydroxyfunktionellen Polymerstrukturen auf Basis cyclischer Ether oder ist aufgebaut aus di- und/oder höher hydroxyfunktionellen Polycarbonat-, Polyester-, Poly(meth)acrylat-, Epoxydharz- und/oder Polyurethanstruktureinheiten oder entsprechenden Hybriden.

Geeignete Polyesterpolyole sind lineare Polyesterdiole oder verzweigte Polyesterpolyole, wie sie in bekannter Weise aus aliphatischen, cycloaliphatischen oder aromatischen Di- bzw. Polycarbonsäuren bzw. ihren Anhydriden wie z. B. Bernstein-, Glutar-, Adipin-, Pimelin-, Kork-, Azelain-, Sebacin-, Nonandicarbon-, Decandicarbon-, Terephthal-, Isophthal-, o-Phthal-, Tetrahydrophthal-, Hexahydrophthal- oder Trimellitsäure sowie Säureanhydride wie o-Phthal-, Trimellit- oder Bernsteinsäureanhydrid oder deren beliebiger Gemische mit mehrwertigen Alkoholen wie z. B. Ethandiol, Di-, Tri-, Tetraethylenglykol, 1,2-Propandiol, Di-, Tri-, Tetrapropylenglykol, 1,3-Propandiol, Butandiol-1,4, Butandiol-1,3, Butandiol-2,3, Pentandiol-1,5, Hexandiol-1,6, 2,2-Dimethyl-1,3-propandiol, 1,4-Dihydroxycyclohexan, 1,4-Dimethylolcyclohexan, Octandiol-1,8, Decandiol-1,10, Dodecandiol-1,12 oder deren Gemische gegebenenfalls unter Mitverwendung höherfunktioneller Polyole wie Trimethylolpropan oder Glycerin hergestellt werden können. Als mehrwertige Alkohole zur Herstellung der Polyesterpolyole kommen natürlich auch cycloaliphatische und/oder aromatische Di- und Polyhydroxylverbindungen in Frage. Anstelle der freien Polycarbonsäure können auch die entsprechenden Polycarbonsäureanhydride oder entsprechende Polycarbonsäureester von niedrigen Alkoholen oder deren Gemische zur Herstellung der Polyester verwendet werden.

Die Polyesterpolyole können auch auf natürlichen Rohstoffen wie Rizinusöl basieren. Ebenfalls möglich ist, dass die Polyesterpolyole auf Homo- oder Mischpolymerisaten von Lactonen basieren, wie sie bevorzugt durch Anlagerung von Lactonen bzw. Lactongemischen wie Butyrolacton, ε-Caprolacton und/oder Methyl-ε-caprolacton an hydroxyfunktionelle Verbindungen wie mehrwertige Alkohole einer OH-Funktionalität von bevorzugt 2, beispielsweise der vorstehend genannten Art, erhalten werden können.

Solche Polyesterpolyole haben bevorzugt zahlenmittlere Molmassen von 200 bis 2000 g/Mol, besonders bevorzugt von 400 bis 1400 g/Mol.

Geeignete Polycarbonatpolyole sind in an sich bekannter Weise durch Umsetzung von organischen Carbonaten oder Phosgen mit Diolen oder Diol-Mischungen zugänglich.

Geeignete organische Carbonate sind Dimethyl-, Diethyl- und Diphenylcarbonat.

Geeignete Diole bzw. Mischungen umfassen die an sich im Rahmen der Polyesterpolyole genannten mehrwertigen Alkohole einer OH-Funktionalität von 2, bevorzugt 1,4-Butandiol, 1,6-Hexandiol und/oder 3-Methylpentandiol. Polyesterpolyole können auch zu Polycarbonatpolyolen umgearbeitet werden. Besonders bevorzugt werden bei der Umsetzung der genannten Alkohole zu Polycarbonatpolyolen Dimethyl- oder Diethylcarbonat eingesetzt.

Solche Polycarbonatpolyole haben bevorzugt zahlenmittlere Molmassen von 400 bis 2000 g/Mol, besonders bevorzugt von 500 bis 1400 g/Mol und ganz besonders bevorzugt von 650 bis 1000 g/Mol.

Geeignete Polyetherpolyole sind gegebenenfalls blockweise aufgebaute Polyadditionsprodukte cyclischer Ether an OH- oder NH-funktionelle Startermoleküle. Als Polyetherpolyole seien z. B. die Polyadditionsprodukte der Styroloxide, des Ethylenoxid, Propylenoxid, Tetrahydrofuran, Butylenoxid, Epichlorhydrins, sowie ihre Mischadditions- und Pfropfprodukte, sowie die durch Kondensation von mehrwertigen Alkoholen oder Mischungen derselben und die durch Alkoxylierung von mehrwertigen Alkoholen, Aminen und Aminoalkoholen gewonnenen Polyetherpolyole.

Geeignete Polymere cyclischer Ether sind insbesondere Polymere des Tetrahydrofuran.

Als Starter können die an sich im Rahmen der Polyesterpolyole genannten mehrwertigen Alkohole sowie primäre oder sekundäre Amine und Aminoalkohole einer OH- oder NH-Funktionalität von 2 bis 8, bevorzugt 2 bis 6, besonders bevorzugt 2 bis 3, ganz besonders bevorzugt gleich 2 verwendet werden.

Solche Polyetherpolyole haben bevorzugt zahlenmittlere Molmassen von 200 bis 2000 g/Mol, besonders bevorzugt von 400 bis 1400 g/Mol und ganz besonders bevorzugt von 650 bis 1000 g/Mol.

Als für Starter verwendete Polyetherpolyole werden bevorzugt die Polymere des Tetrahydrofuran eingesetzt.

Selbstverständlich können auch Mischungen der oben beschriebenen Komponenten für den inneren Block Y eingesetzt werden.

Bevorzugte Komponenten für den inneren Block Y sind Polymere des Tetrahydrofuran sowie aliphatische Polycarbonatpolyole und Polyesterpolyole sowie Polymere des ε-Caprolacton mit zahlenmittleren Molmassen kleiner 3100 g/Mol.

Besonders bevorzugte Komponenten für den inneren Block Y sind difunktionelle Polymere des Tetrahydrofuran sowie difunktionelle aliphatische Polycarbonatpolyole und Polyesterpolyole sowie Polymere des ε-Caprolacton mit zahlenmittleren Molmassen kleiner 3100 g/Mol. Ganz besonders bevorzugt basiert das Startersegment Y auf difunktionellen, aliphatischen Polycarbonatpolyolen, Poly(ε-Caprolacton) oder Polymeren des Tetrahydrofurans mit zahlenmittleren Molmassen größer 500 g/Mol und kleiner 2100 g/Mol.

Bevorzugt eingesetzte Blockcopolymere der Struktur $Y(X_i\text{-}H)_n$ bestehen zu mehr als 50 Gewichtsprozent aus den oben als beschriebenen Blöcken $X_i$ und haben eine zahlenmittlere Gesamtmolmasse von größer 1200 g/Mol.

Besonders bevorzugte Blockcopolyole bestehen zu weniger als 50 Gewichtsprozent aus aliphatischem Polyester, aliphatischem Polycarbonatpolyol oder Poly-THF und zu mehr als 50 Gewichtsprozent aus den oben als erfindungsgemäß beschriebenen Blöcken $X_i$ und haben eine zahlenmittlere Molmasse von größer 1200 g/Mol. Besonders bevorzugte Blockcopolymere bestehen bestehen zu weniger als 50 Gewichtsprozent aliphatischem Polycarbonatpolyol, Poly(ε-Caprolacton) oder Poly-THF und zu mehr als 50 Gewichtsprozent aus den oben als erfindungsgemäß beschriebenen Blöcken $X_i$ und haben eine zahlenmittlere Molmasse von größer 1200 g/Mol.

Ganz besonders bevorzugte Blockcopolymere bestehen zu weniger als 34 Gewichtsprozent aus aliphatischem Polycarbonatpolyol, Poly(ε-Caprolacton) oder Poly-THF und zu mehr als 66 Gewichtsprozent aus den oben als erfindungsgemäß beschriebenen Blöcken $X_i$ und haben eine zahlenmittlere Molmasse von größer 1950 g/Mol und weniger als 9000 g/Mol.

Die beschriebenen Blockcopolyole werden durch Alkylenoxidadditionsverfahren hergestellt.

Als Schreibmonomer B) werden ein oder mehrere verschiedene Verbindungen, die unter Einwirkung aktinischer Strahlung mit ethylenisch ungesättigten Verbindungen unter Polymerisation vernetztende Gruppen (strahlenhärtende Gruppen) aufweisen und selbst frei von NCO-Gruppen sind, eingesetzt. Bevorzugt sind die Schreibmonomere vernetzte Acrylate und / oder Methacrylate. Ganz besonders bevorzugt sind vernetzte Urethanacrylate und Urethan(meth)acrylate.

Bei einer weiteren bevorzugten Ausführungsform ist vorgesehen, dass das Schreibmonomer B) wenigstens ein mono- und / oder ein multifunktionales Schreibmonomer umfasst, wobei es sich insbesondere um mono- und multifunktionelle Acrylat-Schreibmonomere handeln kann. Besonders bevorzugt kann das Schreibmonomer wenigstens ein monofunktionelles und ein multifunktionelles Urethan(meth)acrylat umfassen.

Bei den Acrylat-Schreibmonomeren kann es sich insbesondere um Verbindungen der allgemeinen Formel (II)

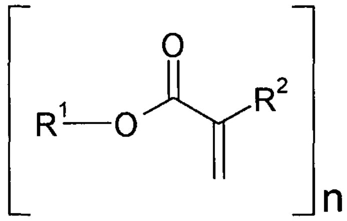

(II)

handeln, bei denen n≥1 und n≤4 ist und $R^1$, $R^2$ unabhängig voneinander Wasserstoff, lineare, verzweigte, cyclische oder heterocyclische unsubstituierte oder gegebenenfalls auch mit Heteroatomen substituierte organische Reste sind. Besonders bevorzugt ist $R^2$ Wasserstoff oder Methyl und/oder $R^1$ ein linearer, verzweigter, cyclischer oder heterocyclischer unsubstituierter oder gegebenenfalls auch mit Heteroatomen substituierter organischer Rest.

Ebenso ist es möglich, dass weitere ungesättigte Verbindungen wie α,β-ungesättigte Carbonsäurederivate wie Acrylate, Methacrylate, Maleinate, Fumarate, Maleimide, Acrylamide, weiterhin Vinylether, Propenylether, Allylether und Dicyclopentadienyl-Einheiten enthaltende Verbindungen sowie olefinisch ungesättigte Verbindungen wie z.B. Styrol, α-Methylstyrol, Vinyltoluol, Olefinine, wie z.B. 1-Octen und/oder 1-Decen, Vinylestern, (Meth)acrylnitril, (Meth)acrylamid, Methacrylsäure, Acrylsäure zugesetzt werden. Bevorzugt sind aber Acrylate und Methacrylate.

Als Acrylate bzw. Methacrylate werden allgemein Ester der Acrylsäure bzw. Methacrylsäure bezeichnet. Beispiele verwendbarer Acrylate und Methacrylate sind Methylacrylat, Methylmethacrylat, Ethylacrylat, Ethylmethacrylat, Ethoxyethylacrylat, Ethoxyethylmethacrylat, n-Butylacrylat, n-Butylmethacrylat, tert.-Butylacrylat, tert.-Butylmethacrylat, Hexylacrylat, Hexylmethacrylat, 2-Ethylhexylacrylat, 2-Ethylhexylmethacrylat, Butoxyethylacrylat, Butoxyethylmethacrylat, Laurylacrylat, Laurylmethacrylat, Isobornylacrylat, Isobomylmethacrylat, Phenylacrylat, Phenylmethacrylat, p-Chlorphenylacrylat, p-Chlorphenylmethacrylat, p-Bromphenylacrylat, p-Bromphenyl-methacrylat, 2,4,6-Trichlorphenylacrylat, 2,4,6-Trichlorphenylmethacrylat, 2,4,6-Tribromphenyl-acrylat, 2,4,6-Tribromphenylmethacrylat, Pentachlorphenylacrylat, Pentachlorphenylmethacrylat, Pentabromphenylacrylat, Pentabromphenylmethacrylat, Pentabrombenzylacrylat, Pentabrombenzylmethacrylat, Phenoxyethylacrylat, Phenoxyethylmethacrylat, Phenoxyethoxyethylacrylat, Phenoxyethoxyethylmethacrylat, Phenylthioethylacrylat, Phenylthioethylmethacrylat, 2-Naphthylacrylat, 2-Naphthylmethacrylat, 1,4-Bis-(2-thionaphthyl)-2-butylacrylat, 1,4-Bis(2-thionaphthyl)-2-butylmethacrylat, Propan-2,2-diylbis[(2,6-dibrom-4,1-phenylen)oxy(2-{[3,3,3-tris(4-chlorphenyl)-propanoyl]-oxy}propan-3,1-diyl)oxyethan-2,1-diyl]-diacrylat, Bisphenol A Diacrylat, Bisphenol A Dimethacrylat, Tetrabromobisphenol A Diacrylat, Tetrabromobisphenol A Dimethacrylat sowie deren ethoxylierte Analogverbindungen, N-Carbazolylacrylate, um nur eine Auswahl verwendbarer Acrylate und Methacrylate zu nennen.

Unter Urethanacrylaten versteht man Verbindungen mit mindestens einer Acrylsäureestergruppe, die zusätzlich über mindestens eine Urethanbindung verfügen. Es ist bekannt, dass solche Verbindungen durch Umsetzung eines Hydroxy-funktionellen Acrylsäureesters mit einer Isocyanat-funktionellen Verbindung erhalten werden können.

Beispiele hierfür verwendbarer Isocyanat-funktionelle Verbindungen sind aromatische, araliphatische, aliphatische und cycloaliphatische Di-, Tri- oder Polyisocyanate. Es können auch Mischungen solcher Di-, Tri- oder Polyisocyanate eingesetzt werden. Beispiele geeigneter Di-, Tri- oder Polyisocyanate sind Butylendiisocyanat, Hexamethylendiisocyanat (HDI), Isophorondiisocyanat (IPDI), 1,8-Diisocyanato-4-(isocyanatomethyl)octan, 2,2,4-und/oder 2,4,4-Trimethylhexamethylendiisocyanat, die isomeren Bis(4,4'-isocyanatocyclohexyl)methane und deren Mischungen beliebigen Isomerengehalts, Isocyanatomethyl-1,8-octandiisocyanat, 1,4-Cyclohexylendiisocyanat, die isomeren Cyclohexandimethylendiisocyanate, 1,4-Phenylendiisocyanat, 2,4- und/oder 2,6-Toluylendiisocyanat, 1,5-Naphthylendiisocyanat, 2,4'- oder 4,4'-Diphenylmethandiisocyanat, 1,5-Naphthylendiisocyanat, m-Methylthiophenylisocyanat, Triphenylmethan-4,4',4" -triisocyanat und Tris(p-isocyanatophenyl)thiophosphat oder deren Derivate mit Urethan-, Harnstoff-, Carbodiimid-, Acylharnstoff-, Isocyanurat-, Allophanat-, Biuret-, Oxadiazintrion-, Uretdion-, Iminooxadiazindionstruktur und Mischungen derselben. Bevorzugt sind dabei aromatische oder araliphatische Di-, Tri- oder Polyisocyanate.

Als hydroxyfunktionelle Acrylate oder Methacrylate für die Herstellung von Urethanacrylaten kommen beispielsweise Verbindungen in Betracht wie 2-Hydroxyethyl-(meth)acrylat, Polyethylenoxid-mono(meth)acrylate, Polypropylenoxidmono(meth)acrylate, Polyalkylenoxidmono(meth)-acrylate, Poly(ε-caprolacton)mono(meth)acrylate, wie z.B. Tone® M100 (Dow, Schwalbach, DE), 2-Hydroxypropyl(meth)acrylat, 4-Hydroxybutyl-(meth)acrylat, 3-Hydroxy-2,2-dimethylpropyl-(meth)acrylat, Hydroxypropyl(meth)acrylat, Acrylsäure-(2-hydroxy-3-phenoxypropylester), die hydroxyfunktionellen Mono-, Di- oder Tetraacrylate mehrwertiger Alkohole wie Trimethylolpropan, Glycerin, Pentaerythrit, Dipentaerythrit, ethoxyliertes, propoxyliertes oder alkoxyliertes Trimethylolpropan, Glycerin, Pentaerythrit, Dipentaerythrit oder deren technische Gemische. Bevorzugt sind 2-Hydroxyethylacrylat, Hydroxypropylacrylat, 4-Hydroxybutylacrylat und Poly(ε-caprolacton)mono(meth)acrylate. Darüber hinaus sind als isocyanat-reaktive oligomere oder polymere ungesättigte Acrylat- und/oder Methacrylatgruppen enthaltende Verbindungen alleine oder in Kombination mit den vorgenannten

monomeren Verbindungen geeignet. Ebenfalls verwendet werden können die an sich bekannten hydroxylgruppenhaltigen Epoxy(meth)-acrylate mit OH-Gehalten von 20 bis 300 mg KOH/g oder hydroxylgruppenhaltige Polyurethan(meth)acrylate mit OH-Gehalten von 20 bis 300 mg KOH/g oder acrylierte Polyacrylate mit OH-Gehalten von 20 bis 300 mg KOH/g sowie deren Mischungen untereinander und Mischungen mit hydroxylgruppenhaltigen ungesättigten Polyestern sowie Mischungen mit Polyester(meth)acrylaten oder Mischungen hydroxylgruppenhaltiger ungesättigter Polyester mit Polyester(meth)acrylaten.

Bevorzugt sind insbesondere Urethanacrylate erhältlich aus der Umsetzung von Tris(p-isocyanatophenyl)thiophosphat und m-Methylthiophenylisocyanat mit alkoholfunktionellen Acrylaten wie Hydroxyethyl(meth)acrylat, Hydroxypropyl(meth)acrylat und Hydroxybutyl(meth)acrylat.

Die eingesetzten Photoinitiatoren C) sind üblicherweise durch aktinische Strahlung aktivierbare Verbindungen, die eine Polymerisation der entsprechender Gruppen auslösen können.

Bei den Photoinitiatoren kann zwischen unimolekularen (Typ I) und bimolekularen (Typ II) Initiatoren unterschieden werden. Desweiteren werden sie je nach ihrer chemischen Natur in Photoinitiatoren für radikalische, anionische, kationische oder gemischte Art der Polymersiation unterschieden.

Typ 1-Photoinitiatoren (Norrish-Typ-1) für die radikalische Photopolymerisation bilden beim Bestrahlen durch eine unimolekulare Bindungsspaltung freie Radikale.

Beispiele für Typ 1-Photoinitiatoren sind Triazine, wie z. B. Tris(trichlormethyl)triazin, Oxime, Benzoinether, Benzilketale, alpha-alpha-Dialkoxyacetophenon, Phenylglyoxylsäureester, Bis-imidazole, Aroylphosphinoxide, z.B. 2,4,6-Trimethyl-benzoyldiphenylphosphinoxid, Sulfonium- und Iodoniumsalze.

Typ II-Photoinitiatoren (Norrish-Typ-II) für die radikalische Polymerisation durchlaufen bei der Bestrahlung eine bimolekulare Reaktion, wobei der Photoinitiator im angeregten Zustand mit einem zweiten Molekül, dem Coinitiator, reagiert und durch Elektronen- oder Protonentransfer oder direkte Wasserstoffabstraktion die polymerisationsauslösenden Radikale bildet.

Beispiele für Typ-II- Photoinitiatoren sind Chinone, wie z. B. Campherchinon, aromatische Ketoverbindungen, wie z. B. Benzophenone in Kombination mit tertiären Aminen, Alkylbenzophenone, halogenierte Benzophenone, 4,4'-Bis(dimethylamino)benzophenon (Michlers Keton), Anthron, , Methyl-p-(dimethylamino)benzoat, Thioxanthon, Ketocoumarine, alpha-Aminoalkylphenon, alpha-Hydroxyalkylphenon und kationische Farbstoffe, wie z. B. Methylenblau, in Kombination mit tertiären Aminen.

Für den UV- und kurzwelligen sichtbaren Bereich werden Typ-I- und Typ-II-Photoinitiatoren eingesetzt, für den längerwelligen sichtbaren Lichtbereich kommen überwiegend Typ-II- Photoinitiatoren zum Einsatz.

Auch die in der EP 0 223 587 A beschriebenen Photoinitiatorsysteme, bestehend aus einer Mischung aus einem Ammoniumalkylarylborat und einem oder mehreren Farbstoffen, können als Photoinitiator vom Typ II für die radikalische Polymerisation eingesetzt werden. Als Ammoniumalkylarylborat eignen sich beispielsweise Tetrabutylammonium Triphenylhexylborat, Tetrabutylammonium Triphenylbutylborat, Tetrabutylammonium Trinapthylhexylborat, Tetrabutylammonium Tris(4-tert.butyl)-phenylbutylborat, Tetrabutylammonium Tris-(3-fluorphenyl)-hexylborat, Tetramethylammonium Triphenylbenzylborat, Tetra(n-hexyl)ammonium (sec-Butyl)triphenylborat, 1-Methyl-3-octylimidazolium Dipentyldiphenylborat und Tetrabutylammonium Tris-(3-chlor-4-methylphenyl)-hexylborat (Cunningham et al., RadTech'98 North America UV/EB Conference Proceedings, Chicago, Apr. 19-22, 1998).

Die für die anionische Polymerisation verwendeten Photoinitiatoren sind in der Regel Typ I-Systeme und leiten sich von Übergangsmetall-Komplexen der ersten Reihe ab. Hier sind beispielsweise Chrom-Salze, wie z.B. trans-$Cr(NH_3)_2(NCS)_4^-$ (Kutal et al, Macromolecules 1991, 24, 6872) oder Ferrocenyl-Verbindungen (Yamaguchi et al. Macromolecules 2000, 33, 1152) zu nennen.

Eine weitere Möglichkeit der anionischen Polymerisation besteht in der Verwendung von Farbstoffen, wie Kristallviolett Leukonitril oder Malachitgrün Leukonitril, die durch photolytischen Zerfall Cyanoacrylate polymerisieren können (Neckers et al. Macromolecules 2000, 33, 7761). Dabei wird das Chromophor in die Polymere eingebaut, so dass die resultierenden Polymere durchgefärbt sind.

Die für die kationische Polymerisation verwendbaren Photoinitiatoren bestehen im Wesentlichen aus drei Klassen: Aryldiazonium-Salze, Onium-Salze (hier speziell: Iodonium-, Sulfonium- und Selenonium-Salze) sowie Organometall-Verbindungen. Phenyldiazonium-Salze können unter Bestrahlung sowohl in Gegenwart als auch bei Abwesenheit eines Wasserstoff-Donors ein Kation erzeugen, das die Polymerisation initiiert. Die Effizienz des Gesamtsystems wird durch die Natur des verwendeten Gegenions zur Diazonium-Verbindung bestimmt. Bevorzugt sind hier die wenig reaktiven, aber recht teuren $SbF_6^-$, $AsF_6^-$ oder $PF_6^-$. Für den Einsatz in Beschichtung dünner Filme sind diese Verbindungen in der Regel weniger geeignet, da durch den nach der Belichtung freigesetzten Stickstoff die Oberflächengüte herabgesetzt wird (pinholes) (Li et al., Polymeric Materials Science and Engineering, 2001, 84, 139).

Sehr weit verbreitet und auch in vielerlei Form kommerziell erhältlich sind Onium-Salze, speziell Sulfonium- und Iodonium-Salze. Die Photochemie dieser Verbindungen ist nachhaltig untersucht worden. Die Iodonium-Salze zerfallen nach der Anregung zunächst homolytisch und erzeugen somit ein Radikal und ein Radikalkation, welches zunächst durch H-Abstraktion in ein Kation übergeht, das schließlich ein Proton freisetzt und dadurch die kationische

Polymerisation startet (Dektar et al. J. Org. Chem. 1990, 55, 639; J. Org. Chem., 1991, 56. 1838). Dieser Mechanismus ermöglicht den Einsatz von Iodonium-Salzen ebenfalls für die radikalische Photopolymerisation. Hierbei kommt der Wahl des Gegenions erneut eine große Bedeutung zu. Bevorzugt werden ebenfalls $SbF_6^-$, $AsF_6^-$ oder $PF_6^-$ verwendet. Ansonsten ist in dieser Strukturklasse die Wahl der Substitution des Aromaten recht frei und im Wesentlichen durch die Verfügbarkeit geeigneter Startbausteine für die Synthese bestimmt. Bei den Sulfonium-Salzen handelt es sich um Verbindungen, die nach Norrish-Typ II zerfallen (Crivello et al., Macromolecules, 2000, 33, 825). Auch bei den Sulfonium-Salzen kommt der Wahl des Gegenions eine kritische Bedeutung zu, die sich im Wesentlichen in der Härtungsgeschwindigkeit der Polymere äußert. Die besten Ergebnisse werden in der Regel mit $SbF_6$ Salzen erzielt.

Da die Eigenabsorption von Iodonium- und Sulfonium-Salze bei < 300 nm liegt, sollten diese Verbindungen für die Photopolymerisation mit nahem UV oder kurzwelligem sichtbarem Licht entsprechend sensibilisiert werden. Dies gelingt durch die Verwendung von längerwellig absorbierenden Aromaten wie z.B. Anthracen und Derivaten (Gu et al., Am. Chem. Soc. Polymer Preprints, 2000, 41 (2), 1266) oder Phenothiazin bzw. dessen Derivaten (Hua et al, Macromolecules 2001, 34, 2488-2494).

Es kann vorteilhaft sein, Gemische dieser Sensibilisatoren oder auch Photoinitiatoren einzusetzen. Je nach verwendeter Strahlungsquelle muss Typ und Konzentration an Photoinitiator in dem Fachmann bekannter Weise angepasst werden. Näheres ist zum Beispiel in P. K. T. Oldring (Ed.), Chemistry & Technology of UV & EB Formulations For Coatings, Inks & Paints, Vol. 3, 1991, SITA Technology, London, S. 61- 328 beschrieben.

Bevorzugte Photoinitiatoren sind Mischungen aus Tetrabutylammonium Tetrahexylborat, Tetrabutylammonium Triphenylhexylborat, Tetrabutylammonium Triphenylbutylborat, Tetrabutylammonium Tris-(3-fluorphenyl)-hexylborat ([191726-69-9], CGI 7460, Produkt der BASF SE, Basel, Schweiz) und Tetrabutylammonium Tris-(3-Chlor-4-methylphenyl)-hexylborat ([1147315-11-4], CGI 909, Produkt der BASF SE, Basel, Schweiz) mit kationischen Farbstoffen, wie sie beispielsweise in H. Berneth in Ullmann's Encyclopedia of Industrial Chemistry, Cationic Dyes, Wiley-VCH Verlag, 2008 beschrieben sind.

Beispiele für kationische Farbstoffe sind Astrazon Orange G, Basic Blue 3, Basic Orange 22, Basic Red 13, Basic Violett 7, Methylenblau, Neu Methylenblau, Azur A, Pyrillium I, Safranin O, Cyanin, Gallocyanin, Brilliant Grün, Kristallviolett, Ethylviolett und Thionin.

Besonders bevorzugt ist, wenn die Photopolymerschicht einen kationischen Farbstoff der Formel $F^+An^-$ enthält.

Unter kationischen Farbstoffen der Formel $F^+$ werden bevorzugt solche der folgenden Klassen verstanden: Acridin-Farbstoffe, Xanthen-Farbstoffe, Thioxanthen-Farbstoffe, Phenazin-Farbstoffe, Phenoxazin-Farbstoffe, Phenothiazin-Farbstoffe, Tri(het)arylmethan-Farbstoffe - insbesondere Diamino- und Triamino(het)arylmethan-Farbstoffe, Mono-, Di- und Trimethincyanin-Farbstoffe, Hemicyanin-Farbstoffe, extern kationische Merocyanin-Farbstoffe, extern kationische Neutrocyanin-Farbstoffe, Nullmethin-Farbstoffe - insbesondere Naphtholactam-Farbstoffe, Streptocyanin-Farbstoffe. Solche Farbstoffe sind beispielsweise in H. Berneth in Ullmann's Encyclopedia of Industrial Chemistry, Azine Dyes, Wiley-VCH Verlag, 2008, H. Berneth in Ullmann's Encyclopedia of Industrial Chemistry, Methine Dyes and Pigments, Wiley-VCH Verlag, 2008, T. Gessner, U. Mayer in Ullmann's Encyclopedia of Industrial Chemistry, Triarylmethane and Diarylmethane Dyes, Wiley-VCH Verlag, 2000 beschrieben.

Mit $An^-$ ist ein Anion gemeint. Bevorzugte Anionen $An^-$ sind insbesondere $C_8$- bis $C_{25}$-Alkansulfonat, vorzugsweise $C_{13}$- bis $C_{25}$-Alkansulfonat, $C_3$- bis $C_{18}$-Perfluoralkansulfonat, $C_4$- bis $C_{18}$-Perfluoralkansulfonat, das in der Alkylkette mindestens 3 Wasserstoffatome trägt, $C_9$- bis $C_{25}$-Alkanoat, $C_9$- bis $C_{25}$-Alkenoat, $C_8$- bis $C_{25}$-Alkylsulfat, vorzugsweise $C_{13}$-bis $C_{25}$-Alkylsulfat, $C_8$- bis $C_{25}$-Alkenylsulfat, vorzugsweise $C_{13}$- bis $C_{25}$-Alkenylsulfat, $C_3$-bis $C_{18}$-Perfluoralkylsulfat, $C_4$- bis $C_{18}$-Perfluoralkylsulfat, das in der Alkylkette mindestens 3 Wasserstoffatome trägt, Polyethersulfate basierend auf mindestens 4 Äquivalenten Ethylenoxid und/oder Äquivalenten 4 Propylenoxid, Bis-$C_4$- bis $C_{25}$-Alkyl-, $C_5$- bis $C_7$-Cycloalkyl-, $C_3$- bis $C_8$-Alkenyl- oder $C_7$- bis $C_{11}$-Aralkyl-sulfosuccinat, durch mindestens 8 Fluoratome substituiertes Bis-$C_2$- bis $C_{10}$-alkyl-sulfosuccinat, $C_8$- bis $C_{25}$-Alkyl-sulfoacetate, durch mindestens einen Rest der Gruppe Halogen, $C_4$- bis $C_{25}$-Alkyl, Perfluor-$C_1$- bis $C_8$-Alkyl und/oder $C_1$- bis $C_{12}$-Alkoxycarbonyl substituiertes Benzolsulfonat, ggf. durch Nitro, Cyano, Hydroxy, $C_1$- bis $C_{25}$-Alkyl, $C_1$- bis $C_{12}$-Alkoxy, Amino, $C_1$- bis $C_{12}$-Alkoxycarbonyl oder Chlor substituiertes Naphthalin- oder Biphenylsulfonat, ggf. durch Nitro, Cyano, Hydroxy, $C_1$- bis $C_{25}$-Alkyl, $C_1$- bis $C_{12}$-Alkoxy, $C_1$- bis $C_{12}$-Alkoxycarbonyl oder Chlor substituiertes Benzol-, Naphthalin- oder Biphenyldisulfonat, durch Dinitro, $C_6$- bis $C_{25}$-Alkyl, $C_4$- bis $C_{12}$-Alkoxycarbonyl, Benzoyl, Chlorbenzoyl oder Toluoyl substituiertes Benzoat, das Anion der Naphthalindicarbonsäure, Diphenyletherdisulfonat, sulfonierte oder sulfatierte, ggf. mindestens einfach ungesättigte $C_8$- bis $C_{25}$-Fettsäureester von aliphatischen $C_1$- bis $C_8$-Alkoholen oder Glycerin, Bis-(sulfo-$C_2$- bis $C_6$-alkyl)-$C_3$- bis $C_{12}$-alkandicarbonsäureester, Bis-(sulfo-$C_2$- bis $C_6$-alkyl)-itaconsäureester, (Sulfo-$C_2$- bis $C_6$-alkyl)-$C_6$- bis $C_{18}$-alkancarbonsäureester, (Sulfo-$C_2$- bis $C_6$-alkyl)-acryl- oder methacrylsäureester, ggf. durch bis zu 12 Halogenreste substituiertes Triscatecholphosphat, ein Anion der Gruppe Tetraphenylborat, Cyanotriphenylborat, Tetraphenoxyborat, $C_4$- bis $C_{12}$-Alkyl-triphenylborat, deren Phenyl- oder Phenoxy-Reste durch Halogen, $C_1$- bis $C_4$-Alkyl und/oder $C_1$- bis $C_4$-Alkoxy substituiert sein können, $C_4$- bis $C_{12}$-Alkyl-trinaphthylborat, Tetra-$C_1$- bis $C_{20}$-alkoxyborat, 7,8- oder 7,9-Dicarba-nido-undecaborat(1-) oder (2-), die gegebenenfalls an den B- und/oder C-Atomen durch eine oder zwei $C_1$- bis $C_{12}$-Alkyl- oder Phenyl-Gruppen substituiert sind, Dodecahydro-dicarbadodecaborat(2-) oder B-$C_1$- bis $C_{12}$-Alkyl-C-phenyl-dode-

cahydro-dicarbadodecaborat(1-) steht, wobei bei mehrwertigen Anionen wie Naphthalindisulfonat $An^-$ für ein Äquivalent dieses Anions steht, und wobei die Alkan- und Alkylgruppen verzweigt sein können und/oder durch Halogen, Cyano, Methoxy, Ethoxy, Methoxycarbonyl oder Ethoxycarbonyl sustituiert sein können.

Besonders bevorzugte Anionen sind sec-$C_{11}$- bis $C_{18}$-Alkansulfonat, $C_{13}$- bis $C_{25}$-Alkylsulfat, verzweigtes $C_8$- bis $C_{25}$-Alkylsulfat, ggf. verzweigtes Bis-$C_6$- bis $C_{25}$-alkylsulfosuccinat, sec- oder tert.-$C_4$- bis $C_{25}$-Alkylbenzolsulfonat, sulfonierte oder sulfatierte, ggf. mindestens einfach ungesättigte $C_8$- bis $C_{25}$-Fettsäureester von aliphatischen $C_1$- bis $C_8$-Alkoholen oder Glycerin, Bis-(sulfo-$C_2$- bis $C_6$-alkyl)-$C_3$- bis $C_{12}$-alkandicarbonsäureester, (Sulfo-$C_2$- bis $C_6$-alkyl)-$C_6$- bis $C_{18}$-alkancarbonsäureester, durch bis zu 12 Halogenreste substituiertes Triscatecholphosphat, Cyanotriphenylborat, Tetraphenoxyborat, Butyltriphenylborat.

Bevorzugt ist auch, wenn das Anion An des Farbstoffs einen AClogP im Bereich von 1-30, besonders bevorzugt im Bereich von 1-12 und insbesondere bevorzugt im Bereich von 1-6,5 aufweist. Der AClogP wird nach J. Comput. Aid. Mol. Des. 2005, 19, 453; Virtual Computational Chemistry Laboratory, http://www.vcclab.org berechnet.

Besonders bevorzugt sind Farbstoffe $F^+An^-$ mit einer Wasseraufnahme $\leq$5 Gew.-%.

Die Wasseraufnahme ergibt sich aus der Formel (F-1)

$$W = (m_f/m_t - 1)*100\% \quad (F-1),$$

worin mf die Masse des Farbstoffs nach Wassersättigung und $m_t$ die Masse des getrockneten Farbstoffs sind. $m_t$ wird durch Trocknen einer bestimmten Farbstoffmenge bis zur Massenkonstanz, beispielsweise bei erhöhter Temperatur im Vakuum ermittelt. $m_f$ wird durch Stehen einer bestimmtem Farbstoffmenge an der Luft bei einer definierten Luftfeuchtigkeit bis zur Gewichtskonstanz bestimmt.

Ganz besonders bevorzugt ist, wenn der Photoinitiator eine Kombination von Farbstoffen, deren Absorptionsspektren zumindest teilweise den Spektralbereich von 400 bis 800 nm abdecken, mit wenigstens einem auf die Farbstoffe abgestimmten Coinitiator umfasst.

Der Katalysator D) kann wenigstens eine Verbindung der allgemeinen Formel (III) oder (IV)

$$R^3Sn(IV)L_3 \quad (III)$$

$$L_2Sn(IV)R^3_2 \quad (IV)$$

umfassen, in denen

$R^3$ ein linearer oder verzweigter, gegebenenfalls mit Heteroatomen, insbesondere mit Sauerstoff, auch in der Kette substituierter Alkylrest mit 1 - 30 C-Atomen ist und

L jeweils unabhängig voneinander -$O_2C$-$R^4$ Gruppen sind, bei denen $R^4$ ein linearer oder verzweigter, gegebenenfalls mit Heteroatomen, insbesondere mit Sauerstoff, auch in der Kette substituierter Alkylrest mit 1 - 30 C-Atomen, ein Alkenylrest mit 2 - 30 C-Atomen oder ein beliebiger substituierter oder unsubstituierter gegebenenfalls polycyclischer aromatischer Ring mit oder ohne Heteroatomen ist.

Besonders bevorzugt ist hier, wenn $R^3$ ein linearer oder verzweigter Alkylrest mit 1 - 12 C-Atomen, besonders bevorzugt ein Methyl-, Ethyl-, Propyl, *n-*, *i-*, t-Butyl-, *n*-Octyl-Rest und ganz besonders bevorzugt ein *n-*, *i-*, *t*-Butyl-Rest ist und / oder $R^4$ ein linearer oder verzweigter, gegebenenfalls mit Heteroatomen, insbesondere mit Sauerstoff, auch in der Kette substituierter Alkyl-Rest mit 1 - 17 C-Atomen oder Alkenyl-Rest mit 2 - 17 C-Atomen, besonders bevorzugt ein linearer oder verzweigter Alkyl- oder Alkenylrest mit 3 - 13 C-Atomen ganz besonders bevorzugt ein linearer oder verzweigter Alkyl- oder Alkenylrest mit 5 - 11 C-Atomen ist. Insbesondere sind alle L gleich.

Weitere geeignete Katalysatoren sind beispielsweise Verbindungen der allgemeinen Formel (V) oder (VI).

$$Bi(III)M_3 \quad (V),$$

$$Sn(II)M_2 \quad (VI),$$

in der M jeweils unabhängig voneinander -$O_2C$-$R^5$ Gruppen sind, bei denen $R^5$ ein gesättigter oder ungesättiger oder mit Heteroatomen substituierter $C_1$- bis $C_{19}$-Alkylrest oder $C_2$- bis $C_{19}$--Alkenylrest, insbesondere ein $C_6$- bis $C_{11}$-Alkylrest und besonders bevorzugt ein $C_7$- bis $C_9$-Alkylrest oder ein gegebenenfalls aromatisch oder mit Sauerstoff oder Stickstoff beliebig substituierter $C_1$- bis $C_{18}$-Alkylrest ist, wobei in den Formel (V) und (VI) M nicht gleichbedeutend sein muss.

Besonders bevorzugt ist, wenn der Katalysator D) aus der Gruppe der oben genannten Verbindungen der Formeln (III) und/oder (IV) ausgewählt wird.

Weitere Bestandteile der Photopolymerschicht können sein: Radikalstabilisatoren oder andere Hilfs- und Zusatzstoffe.

Gemäß einer weiteren Ausführungsform ist vorgesehen, daß die Photopolymerschicht zusätzlich Additive und besonders bevorzugt Urethane als Additive enthält, wobei die Urethane insbesondere mit wenigstens einem Fluoratom substituiert sein können.

Bevorzugt können die Additive die allgemeine Formel (VII)

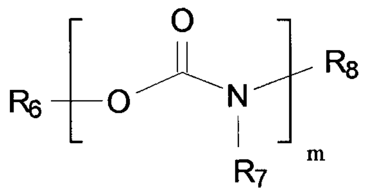

(VII)

haben, in der m≥1 und m≤8 ist und $R^6$, $R^7$, $R^8$ unabhängig voneinander Wasserstoff, lineare, verzweigte, cyclische oder heterocyclische unsubstituierte oder gegebenenfalls auch mit Heteroatomen substituierte organische Reste sind, wobei bevorzugt mindestens einer der Reste $R^6$, $R^7$, $R^8$ mit wenigstens einem Fluoratom substituiert ist und besonders bevorzugt $R^6$ ein organischer Rest mit mindestens einem Fluoratom ist. Besonders bevorzugt ist $R^6$ ein linearer, verzweigter, cyclischer oder heterocyclischer unsubstituierter oder gegebenenfalls auch mit Heteroatomen wie beispielsweise Fluor substituierter organischer Rest.

**Beschreibung des strahlenhärtenden Harzes**

Bevorzugt kann das strahlenhärtende Harz I) wenigstens ein polyester-, polyether-, polycarbonat- und / oder polyurethanhaltiges Bindemittel mit radikalisch polymerisierbaren Gruppen umfassen, wobei es sich bei den radikalisch polymerisierbaren bevorzugt um Acryl-, Methacryl-, Allyl-, Vinyl-, Maleinyl- und / oder Fumarylgruppen, besonders bevorzugt um Acryl- und / oder Methacrylgruppen und ganz besonders bevorzugt um Acrylgruppen handeln kann. (Meth)acrylgruppenhaltige Bindemittel werden in der Regel mittels Veresterung von (Meth)Acrylsäure mit Polyolen (siehe z.B. DE000019834360A1, EP000000900778B1) oder mit Poly-oxalkylierten Polyolen nach DE102007037140A1 hergestellt. Je nach den enthaltenen chemischen Gruppen der Polyole spricht man von Polyesteracrylaten, Polyetheracrylaten oder Polycarbonatacrylaten. Sind mehrere Gruppentypen enthalten, spricht man auch von z.B. Polyether/esteracrylaten.

Ebenfalls können auch (Meth)acrylgruppenhaltige Bindemittel mit Di- oder Polyisocyanaten zu höhermolekularen Harzen vorvernetzt werden, wodurch zusätzlich Urethangruppen eingeführt werden. Derartige Harze nennt man Urethanacrylate. Verwendet man aliphatische Isocyanate, dann nennt man diese Produkte auch aliphatische Urethanacrylate. Verwendet man aromatische Isocyanate, dann nennt man diese Produkte auch aromatische Urethanacrylate. Ebenfalls unter Urethanacrylaten versteht man Addukte aus Di- und Polyisocyanaten und Hydroxygruppen funktionellen Acrylsäureestern (wie z.B. Hydroxyethyl-, Hydroxypropyl- und Hydroxybutylacrylat), wie u.a. in DE19944156A1 und DE 10143630A1 beschrieben ist.

Vorteilhafte niedrigviskose Urethanacrylate, die zusätzlich Allophanatgruppen enthalten, können auch verwendet werden. Diese werden unter spezieller Katalyse aus Isocyanaten und intermediär hergestellten Urethanacrylaten nach u.a. DE102004048873A1 und DE 102009008569A1 verfügbar gemacht und sind ebenfalls gut geeignet.

Weiter verwendbare Bindemittel sind Epoxyacrylate, die durch Umsetzung von Epoxyharzen mit Acrylsäure hergestellt werden können. Epoxyharze sind Umsetzungprodukte von niedermolekularen Diepoxyden, wie sie u.a. aus Bisphenol-A und Epichlorhydrin in verschiedenen Abmischungsverhältnissen erhältlich sind. Andere Epoxyacrylate auf Basis anderer aliphatischer oder aromatischer Alkohole/Phenole mit Epichlorhydrin und anschließender Umsetzung mit Acrylsäure sind ebenfalls verwendbar.

Bevorzugt ist, wenn das strahlenhärtende Harz I) wenigstens eine Verbindung aus der Gruppe der Polyetheracrylate, Polyesteracrylate, aliphatische Urethanacrylate, aromatische Urethanacrylate und Epoxyacrylate und bevorzugt wenigstens ein aliphatisches Urethanacrylat und / oder wenigstens ein aromatisches Urethanacrylat enthält.

Gemäß einer weiteren bevorzugten Ausführungsform der Erfindung ist vorgesehen, dass in dem strahlenhärtenden Harz I) ≤ 4 Gew.-% Verbindungen mit einem gewichtsmittleren Molekulargewicht < 500 und ≥ 77 Gew.-% Verbindungen mit einem gewichtsmittleren Molekulargewicht > 1000 und bevorzugt ≤ 3,5 Gew.-% Verbindungen mit einem gewichtsmittleren Molekulargewicht < 500 und ≥ 79 Gew.-% Verbindungen mit einem gewichtsmittleren Molekulargewicht

> 1000 enthalten sind.Ebenfalls können auch Abmischungen verschiedener strahlenhärtender Harze I) verwendet werden. Für diese Mischungen gelten dann die oben genannten geeigneten gewichtsmittleren Molekulargewichtsanteile analog und beziehen sich auf die gemittelten gewichtsmittleren Molekulargewichtsanteile dieser Mischungen.

In der strahlenhärtenden Schicht werden bevorzugt zu mindestens 85 Gew% eines oder mehrerer strahlenhärtender Harze I) verwendet.

**Beschreibung des isocyanatfunktionelles Harz II)**

Das isocyanatfunktionelle Harz II) kann wenigstens ein aliphatisches, araliphatisches oder aromatisches isocyanathaltiges Bindemittel umfassen. Besonders bevorzugt ist, wenn das Isocyanat-haltige Bindemittel ein Isocyanatfunktionelles Prepolymer ist, das bevorzugt durch Umsetzung eines multifunktionellen Alkohols mit einem Überschuss Diisocyanat erhältlich ist. Dabei eignen sich insbesondere diejenigen Prepolymere, die durch Umsetzung von di- oder höherfunktionellen Alkoholen und Diisocyanaten bei Überschuß von Diisocyanat herstellbar sind. In der DE 10 2009 037 009 A1 und in der DE 10 2009 010 069 A1 sind typische Aufbaukomponenten und Verfahrenschritte zur Herstellung besonders geeigneter isocyanatfunktioneller Harze beschrieben.

Weiterhin können auch isocyanatfunktionelle Harze verwendet werden, die zusätzlich noch (Meth)acrylatgruppen aufweisen. Typischerweise werden derartige Produkte durch Umsetzung von isocyanatfunktionellen Prepolymeren oder von Polyisocyanaten mit einem hydroxyfunktionellen (Meth)acrylat wie Hydroxyethyl-, Hydroxypropyl- und Hydroxybutyl(meth)acrylat im stöchiometrischen Überschuß (NCO:OH >1) hergestellt. Polyisocyanate sind dabei Umsetzungsprodukte von Diisocyanaten wie Hexamethylendiisocyanat (HDI), Xylylendiisocyanat (XDI), Isophorondiisocyanat (IPDI), Methylendiisocyanat (MDI), den isomeren Bis(isocyanatocyclohexyl)methan (H12-MDI), Toluylidendiisocyanat (TDI) und anderen technisch zugänglichen Diisocyanaten zu Isocyanurat-, Biuret-, Iminooxadiazintrion-, Uretdion-, Allophanat- oder deren Misch-oligomerengemischen.

Ebenfalls eignen sich Umsetzungprodukte von Prepolymeren auf Basis der Polyisocyanaten mit Diolen und hydroxyfunktionellen (Meth)acrylat wie Hydroxyethyl-, Hydroxypropyl- und Hydroxybutyl(meth)acrylat im stöchiometrischen Überschuß (NCO:OH >1). Die hier verwendeten Diole sind einfache Diole wie Ethylenglycol, Propylenglycol, Butandiol, Hexandiol, (iso)-Oktandiole, Diethylenglycol, Triethylengylcol, Neopentylglcol bzw. deren Adukte mit Ethylenoxid und/oder Propylenoxid zu Oligoethern, deren Addukte mit ε-Caprolacton zu Oligoestern, oder Polykondensation mit Disäuren wie Adipinsäure, Maleinsäure, Phthalsäure, Isopthalsäure, Terephthalsäure, und dergl. zu Oligoestern.

Bevorzugt ist auch, wenn in dem isocyanatfunktionellen Harz II) ≤ 4 Gew.-% und besonders bevorzugt ≤ 3 Gew.-% Verbindungen mit einem gewichtsmittleren Molekulargewicht < 500 enthalten sind.

Ebenfalls können auch Abmischungen verschiedener isocyanatfunktioneller Harze II) verwendet werden. Für diese Mischungen gelten dann die oben genannten geeigneten gewichtsmittleren Molekulargewichtsanteile analog und beziehen sich auf die gemittelten gewichtsmittleren Molekulargewichtsanteile dieser Mischungen.

Vorteilhaft ist auch, wenn in der Schutzschicht ≥ 3 Gew.-% und ≤ 15 Gew.-%, bevorzugt ≥ 5 Gew.-% und ≤ 15 Gew.-% und besonders bevorzugt ≥ 8 Gew.-% und ≤ 12 Gew.-% des isocyanatfunktionellen Harzes II) enthalten sind.

**Beschreibung des Photoinitiatorsystems III)**

Das Photoinitiatorsystem III) umfasst Initiatoren, die eine radikalische Polymerisation nach Bestrahlen mit energiereicher Strahlung wie zum Beispiel UV-Licht auslösen können. Solche Photoinitiatoren sind beispielsweise beschrieben in P. K. T. Oldring (Ed.), Chemistry & Technology of UV & EB Formulations For Coatings, Inks & Paints, Vol. 3, 1991, SITA Technology, London, S. 61-325. Bevorzugt kann das Photoinitiatorsystem III) wenigstens eine Verbindung aus der Gruppe 2-Hydroxyphenylketone, insbesondere 1-Hydroxycyclohexyl-phenyl-keton, Benzilketale, insbesondere Benzildimethylketal, Acylphospinoxide, insbesondere Bis-(2,4,6-trimethylbenzoyl)-phenylphosphinoxid, Diacylphosphinoxide, Benzophenon und dessen Derivate umfassen. Sie können allein oder in Mischung gegebenenfalls auch zusammen mit weiteren Beschleunigern oder Coinitiatoren als Zusatz berechnet auf Festkörper des Beschichtungssystems in Mengen von 0,1 bis 10 Gew.-%, bevorzugt 2 bis 7 Gew.-%, besonders bevorzugt 2,5 bis 5 Gew.-% verwendet werden.

Weiterhin kann die Schutzschicht weitere Additive enthalten, die auch je nach Auftragsart zusätzlich verwendet werden: Verlaufshilfsmittel (z.B. Polyacrylate, Silikone, hybride Materialien), Antistatikagenzien; Füllmittel (z.B. Natriumcarbonat, Kalziumkarbonat), Antiblockmittel (Silica), Lichtschutzmitteln (z.B. UV-Absorber, HALS-Amine, Phosphonate), Pigmente und Farbstoffe.

**Die Herstellung des erfindungsgemäßen Schichtaufbaus**

Ein weiterer Gegenstand der Erfindung ist ein Verfahren zur Herstellung eines erfindungsgemäßen Schichtaufbaus, bei dem auf die belichtete Photopolymerschicht eine Mischung wenigstens umfassend das strahlungshärtende Harze I), das Isocyanat-funktionelle Harzes II) und das Photoinitiatorsystem III) aufgebracht und ausgehärtet wird.

Die Aufbringung erfolgt mittels üblicher Applikationstechniken von Flüssigkeiten auf die Hologramm enthaltende Photopolymerschicht. Übliche Verfahren sind flächig, kontinuierliche applizierende Techniken wie die dem Fachmann bekannte Rakelverfahren (wie Doctor Blade, Walzenrakel / knife-over-Roll, comma-bar, Luftrakel, Gummituchrakel, u.a), Düsensysteme (z.B. Schlitzdüse), Vorhanggießer (curtain coater), Walzenantragsverfahren (Rasterwalzen, Reverse Roll Coater), Tauchverfahren, Siebdruck bzw. Siebapplikation.

Verwendet man die Schutzschicht als direkte Versiegelung für die Photopolymerschicht, so folgt nach dem Applizieren die Strahlenhärtung mittels UV-Strahlung. Hierzu verwendet man Hochdruckdampflampen, die mit unterschiedlichen Metalllampendotierungen zur Anpassung derer Emissionsspektren dem verwendeten Photoinitiatorsystem III) angepaßt werden können. Es kann dabei vorteilhaft sein, die Wärmestrahlung der UV-Hochdruckdampflampen durch dichroitische Reflektoren oder dergleichen von der strahlenhärtenden Schicht abzuhalten.

Ebenfalls eignet sich der erfindungsgemäße Schichtaufbau z.B. zur Verwendung in Etiketten oder Aufklebern. Bei diesen Anwendungen verwendet man einen (Haft)-Klebstoff ("pressure sensitive adhesive"), zum Verkleben der Etiketten bzw. Aufklebern. Übliche Haft-Klebstoffe sind Polyacrylatklebstoffe, die in der Regel zu einer starken Hologrammverfärbung führen.

Der erfindungsgemäße Schichtaufbau kann nun den direkten Einfluß des (Haft)-klebstoffes auf das Hologramm vermeiden, indem die Schutzschicht zwischen Hologramm enthaltender Photopolymerschicht und (Haft)-klebstoff positioniert wird. Die Applikation des (Haft-) Klebstoffes erfolgt dabei mittels Flüssigantragverfahren oder mittels eines Klebstoffschichttransferverfahrens auf die Schutzschicht.

Das Klebstoffschichttransferverfahren eignet sich insbesondere, wenn bei der Herstellung der Etiketten oder Aufklebern keine flüssigen Chemikalien gehandhabt werden sollen oder wenn die Schichtdicke der (Haft)-klebstoffschicht präzise eingestellt werden soll. Dabei wird in einem vorgelagerten Schritt die (Haft)-klebstoffschicht auf ein wiederablösbares Substrat appliziert und ggf. mit einer weiteren ablösbaren Kaschierfolie geschützt. Im Klebstoffschichttransferverfahren wird dann die Kaschierfolie abgezogen und der (Haft)-Klebstoff direkt auf die Schutzschicht auflaminiert. Meistens verbleibt das Substrat des (Haft)-klebstoffes als Transfersubstrat bis zur Applikation der Etikette/des Aufklebers. Auf die Kaschierfolie kann verzichtet werden, wenn die Rückseite des Transfersubstrats ebenfalls antihaftend ausgerüstet ist.

Es kann je nach Klebstofftype vorteilhaft sein, die UV-Strahlungshärtung der Schutzschicht vor oder nach der Applikation des (Haft-) Klebstoffes durchzuführen. Es ist bevorzugt, die Härtung vor der Applikation des (Haft-) Klebstoffes durchzuführen. Ebenfalls ist die Applikation mittels Transferklebstofffilms bevorzugt.

Für die Verwendung eines Mehrschichtaufbaus aus Photopolymerschicht und Schutzschicht und weiteren Schichten in einem Etikett, in einer Sicherheitskarte, in einer Banknote, in einem Druckartikel, in einem optischen Aufbau, in einem elektronischen Display etc. kann es von Vorteil sein, die Schutzschicht als Verklebungslösung für die Photopolymerschicht direkt zu verwenden. Dies gilt insbesondere für Substrate aus Papier, Thermoplasten, Duroplasten, Metallen, Glas, Holz, lackierten, beschichteten, laminierten oder bedruckten Substraten etc. Es kann dabei von Vorteil sein, die Substrate vorzubehandeln. Bespiele hierfür sind chemische Vorbehandlung mit Lösemitteln, zur Vorreinigung wie Entfettung, physikalische Vorbehandlung wie Plasmabehandlung oder Koronabehandlung, Strahlungsaktivierung, Abscheidung oder Auftragung haftvermittelnder Schichten. Die UV-Strahlungshärtung der Schutzschicht wird dabei nach der Applikation auf derartige Substrate durchgeführt. Die Applikation erfolgt entweder durch Nassauftrag der Formulierung der Schutzschicht auf das Photopolymer und anschließender direkter Lamination des Substrats oder durch Nassauftrag der Formulierung der Schutzschicht auf das Substrat und anschließender direkter Lamination des Photopolymers oder durch gleichzeitigen Auftrag, z.B. in einem Laminator. Bei dicken also nicht UV transparenten oder gar intransparenten Schichten kann es von Vorteil sein, andere hochenergetische Strahlung wie Elektronen- oder Röntgenstrahlung zur Härtung der Schutzschicht zu verwenden.

Gemäß einer weiteren bevorzugten Ausführungsform der Erfindung kann in die Photopolymerschicht ein Hologramm einbelichtet sein. Die Hologramme können beliebige holografische Volumenhologramme sein, die nach dem Fachmann bekannten Verfahren aufgezeichnet wurden. Darunter fallen unter anderem monochromatisch belichtete oder mit mehreren Lasern unterschiedlicher Emissionswellenlänge erzeugte mehr- oder vollfarbige Reflektionshologramme, In-Line (Gabor) Hologramme, Off-Axis Hologramme, Full-Aperture Transfer Hologramme, Weißlicht-Transmissionshologramme ("Regenbogenhologramme"), Lippmannhologramme, Denisyukhologramme, Off-Axis Reflektionshologramme, Edge-Lit Hologramme sowie holographische Stereogramme.

Mögliche optische Funktionen der Hologramme, entsprechen den optische Funktionen von Lichtelementen wie Linsen, Spiegel, Umlenkspiegel, Filter, Streuscheiben (mit und ohne eingeschränkte Sichtzone (eye box), Beugungselemente, Lichtleiter, Lichtlenker (waveguides), Projektionsscheiben, Masken, optische Prismen zur spektralen chromatischen Aufspaltung, Lichtlenkung und Lichtführung sowie Lichtformung. Häufig zeigen diese optischen Elemente eine Frequenzselektivität, je nachdem wie die Hologramme belichtet wurden und welche Dimensionen das Hologramm hat.

Zudem können mittels der erfindungsgemäßen Schichtaufbauten auch holographische Bilder oder Darstellungen hergestellt werden, wie zum Beispiel für persönliche Portraits, biometrische Darstellungen in Sicherheitsdokumenten, oder allgemein von Bilder oder Bildstrukturen für Werbung, Sicherheitslabels, Markenschutz, Markenbranding, Etiketten,

Designelementen, Dekorationen, Illustrationen, Sammelkarten, Bilder und dergleichen sowie Bilder, die digitale Daten repräsentieren können u.a. auch in Kombination mit den zuvor dargestellten Produkten. Holographische Bilder können den Eindruck eines dreidimensionalen Bildes haben, sie können aber auch Bildsequenzen, kurze Filme oder eine Anzahl von verschiedenen Objekten darstellen, je nachdem aus welchem Winkel, mit welcher (auch bewegten) Lichtquelle etc. diese beleuchtet wird. Aufgrund dieser vielfältigen Designmöglichkeiten stellen Hologramme, insbesondere Volumenhologramme, eine attraktive technische Lösung für die oben genannten Anwendung dar.

**Beispiele:**

Die Erfindung wird im Folgenden anhand von Beispielen näher erläutert.

**Einsatzstoffe:**

Desmodur® N 3900 ist ein Handelsprodukt der Bayer MaterialScience AG, Leverkusen, Deutschland, Hexandiisocyanat-basiertes Polyisocyanat, Anteil an Iminooxadiazindion mindestens 30 %, NCO-Gehalt: 23,5 %.

Polyol 1 ist ein experimentelles Produkt der Bayer MaterialScience AG, Leverkusen, Deutschland, das Herstellungsverfahren ist unten beschrieben.

Schreibmonomer 1 ist ein experimentelles Produkt der Bayer MaterialScience AG, Leverkusen, Deutschland, die Herstellung ist unten beschrieben.

Schreibmonomer 2 ist ein experimentelles Produkt der Bayer MaterialScience AG, Leverkusen, Deutschland, die Herstellung ist unten beschrieben.

Additiv 1 ist ein experimentelles Produkt der Bayer MaterialScience AG, Leverkusen, Deutschland, die Herstellung ist unten beschrieben.

Farbstoff 1-3: sind experimentelle Produkte der Bayer MaterialScience AG, Leverkusen, Deutschland, deren Herstellung ist unten beschrieben.

Coinitiator 1: Tetrabutylammonium Tris(3-chlor-4-methylphenyl)hexylborat (erhältlich als CGI 909, Produkt der BASF SE, Basel, Schweiz).

Byk® 310 (silikonbasiertes Oberflächenadditiv der Firma BYK-Chemie GmbH, Wesel, 25%ige Lösung in Xylol).

Harz 1: Desmolux U 200 ist ein Handelsprodukt der Bayer MaterialScience AG, Leverkusen, ein hartes aber flexibles aliphatisches Urethanacrylat in 100% Lieferform mit einer typische Viskosität von 9000mPas/23°C

Harz 2: Desmolux U 100 ist ein Handelsprodukt der Bayer MaterialScience AG, Leverkusen, ein hartes aber flexibles aliphatisches Urethanacrylat in 100% Lieferform mit einer typische Viskosität von 7500mPas/23°C

Harz 3: Desmolux U 500 ist ein Handelsprodukt der Bayer MaterialScience AG, Leverkusen, ein hartes, flexibles aromatisches Urethanacrylat in 100% Lieferform mit einer typische Viskosität von 6000mPas/23°C

Harz 4: Desmolux XP 2513 ist ein Versuchsprodukt der Bayer MaterialScience AG, Leverkusen, ein flexibles aliphatisches Urethanacrylat in 100% Lieferform mit einer typische Viskosität von 25000mPas/23°C

Harz 5: Desmolux XP 2738 ist ein Versuchsprodukt der Bayer MaterialScience AG, Leverkusen, ein hartes, aliphatisches auf Allophanat basierendes Urethanacrylat in 100% Lieferform mit einer typische Viskosität von 30000mPas/23°C

Harz 6: Desmolux XP 2739 ist ein Versuchsprodukt der Bayer MaterialScience AG, Leverkusen, ein hochreaktives, hartes, aliphatisches auf Allophanat basierendes Urethanacrylat in 100% Lieferform mit einer typische Viskosität von 20000mPas/23°C

Harz 7: Desmolux XP 2732 ist ein Versuchsprodukt der Bayer MaterialScience AG, Leverkusen, ein hartes, hochfunktionelles Polyesteracrylat in 100% Lieferform mit einer typische Viskosität von 2500mPas/23°C

Harz 8: Desmolux XP 2744 ist ein Versuchsprodukt der Bayer MaterialScience AG, Leverkusen, ein hartes, aber flexibles Polyesteracrylat in 100% Lieferform mit einer typische Viskosität von 5500mPas/23°C

Harz 9: Desmolux XP 2666 ist ein Versuchsprodukt der Bayer MaterialScience AG, Leverkusen, ein hartes, aliphatisches auf Allophanat basierendes Urethanacrylat in 100% Lieferform mit einer typische Viskosität von 60000mPas/23°C

Harz 10: Desmolux XP 2733 ist ein Versuchsprodukt der Bayer MaterialScience AG, Leverkusen, ein hartes, aber flexibles Polyesteracrylat in 100% Lieferform mit einer typische Viskosität von 18000mPas/23°C

Harz 11: Desmolux U 400 ist ein Handelsprodukt der Bayer MaterialScience AG, Leverkusen, ein hartes, aliphatisches Urethan(hexa)acrylat in 60% Lieferform in PTTA mit einer typische Viskosität von 90000mPas/23°C

Harz 12: Desmolux U 680 H ist ein Handelsprodukt der Bayer MaterialScience AG, Leverkusen, ein hartes, aliphatisches Urethan(hexa)acrylat in 80% Lieferform in Hexandioldiacrylat mit einer typische Viskosität von 29000mPas/23°C

Harz 13: Desmolux XP 2299 ist ein Versuchsprodukt der Bayer MaterialScience AG, Leverkusen, ein mittelhartes, aminmodifiziertes Polyetheracrylat in 100% Lieferform mit einer typische Viskosität von 600mPas/23°C

Harz 14: Desmolux U 375 H ist ein Handelsprodukt der Bayer MaterialScience AG, Leverkusen, ein hartes aber flexibles, aliphatisches Urethan(hexa)acrylat in 75% Lieferform in Hexandioldiacrylat mit einer typische Viskosität von 60000mPas/23°C

Harz 15: Desmolux XP 2266 ist ein Versuchsprodukt der Bayer MaterialScience AG, Leverkusen, ein hartes aber flexibles, Esterepoxyacrylat in 100% Lieferform mit einer typische Viskosität von 6500mPas/23°C

Harz A: Desmolux VP LS 2396 ist ein Versuchsprodukt der Bayer MaterialScience AG, Leverkusen, ein flexibles, aliphatisches Isocyanatgruppen enthaltendes Urethanacrylat in 100 % Lieferform mit einer typische Viskosität von 16000 mPas/23 °C und einem NCO Gehalt von 7,5 %. Nach GPC Analyse enthält das Harz 0,88 Gew-% an Komponenten mit einem gewichtsmittleren Molekulargewicht < 500.

Harz B: Desmolux XP 2617 ist ein Versuchsprodukt der Bayer MaterialScience AG, Leverkusen, ein auf Hexamethylendiisocyanat basierendes aliphatisches Polyisocyanatprepolymer in 100% Lieferform mit einer typische Viskosität von 3000-5500 mPas/23°C und einem NCO Gehalt von 12,0-13,0 %. Nach GPC Analyse enthält das Harz 2,70 Gew-% an Komponenten mit einem gewichtsmittleren Molekulargewicht < 500.

Irgacure 2022 ist ein Handelsprodukt der BASF SE, Ludwigshafen (ehem. Ciba SC), Deutschland und ist ein 80:20 Gemisch von 2-Hydroxy-2-methyl-1-phenyl-1-propanon und Phenyl- bis(2,4,6-trimethyl benzoyl)phosphinoxid.

Jeffcat ZF 10 ist ein Handelsprodukt der Huntsman Performance Products, Everberg, Belgien und ist ein Isocyanataktivierender Katalysator: N,N,N'-trimethyl-N'-hydroxyethyl-bisaminoethylether.

**Messmethoden:**

**Gelpermeationschromatografie zur Bestimmung der gewichtsmittleren Molekulargewichtsanteile (GPC)**

Als Eluent diente unstabilisiertes Tetrahydrofuran bei einer Flussrate von 0,6 ml/min. Als stationäre Phase wurden vier hintereinander geschaltete Säulen der Fa. Macherey&Nagel, Typ: 2 x Nucleogel GPC 100-5 sowie 2 x Nucleogel GPC 50-5 verwendet. Als Trennmaterial dient quervernetztes Polystyrol-Divinylbenzol-Polymer mit 5 µm Partikelgröße sowie 50 bzw. 100 Ä Porenweite bei einer Säulenlänge von 30 cm sowie 7,7 mm Durchmesser. Jede Säule wies eine Länge von 30 cm und einen Durchmesser von 7,7 mm auf. Die Kalibrierung erfolgte mit einer Polystyrolkalibrierung im Bereich von 162 bis 8400 g/mol. Zur Auswertung wurde die Software PSS WINGPC Unity der Firma PolymerStandardServices verwendet.

**Messung der Trockenschichtdicke der Photopolymere**

Die physikalische Schichtdicke wurde mit marktgängigen Weisslichtinterferometern ermittelt, wie z.B. das Gerät FTM-Lite NIR Schichtdickenmessgerät der Firma Ingenieursbüro Fuchs.

Die Bestimmung der Schichtdicke beruhte im Prinzip auf Interferenzerscheinungen an dünnen Schichten. Dabei überlagerten sich Lichtwellen, die an zwei Grenzflächen unterschiedlicher optischer Dichte reflektiert worden sind. Die ungestörte Überlagerung der reflektierten Teilstrahlen führte nun zur periodischen Aufhellung und Auslöschung im Spektrum eines weißen Kontinuumstrahlers (z.B. Halogenlampe). Diese Überlagerung nennt der Fachmann Interferenz. Die Interferenzspektren wurden gemessen und mathematisch ausgewertet.

**Festgehalt**

Ca. 1g der Probe wurde in einem unlackierten Dosendeckel aufgetragen und mittels einer Büroklammer gut verteilt. Dosendeckel und Büroklammer wurden zuvor gewogen. Die Probe mit Büroklammer und Dosendeckel wurden eine Stunde bei 125°C in einem Ofen getrocknet. Der Festgehalt ergab sich: (Auswaage-Tara)* 100 / (Einwaage-Tara)

**Isocyanatgehalt (NCO-Gehalt)**

Die angegebenen NCO-Werte (Isocyanat-Gehalte) wurden gemäß DIN EN ISO 11909 bestimmt.

**Wassergehalt**

Die angegebenen Wassergehalte (KF) aus Lösung wurden gemäß DIN 51777 bestimmt.

**Herstellung der Substanzen:**

**Herstellung von Polyol 1:**

In einem 1 L Kolben wurden 0,18 g Zinnoktoat, 374.8 g ε-Caprolacton und 374.8 g eines difunktionellen Polytetrahydrofuranpolyetherpolyols (Equivalentgewicht 500 g/Mol OH) vorgelegt und auf 120 °C aufgeheizt und so lange auf dieser Temperatur gehalten, bis der Festgehalt (Anteil der nicht-flüchtigen Bestandteile) bei 99.5 Gew.-% oder darüber lag. Anschließend wurde abgekühlt und das Produkt als wachsiger Feststoff erhalten.

**Herstellung von Schreibmonomer 1 (Phosphorthioyltris(oxy-4,1-phenylenimino-carbonyloxyethan-2,1-diyl)-triacrylat):**

In einem 500 mL Rundkolben wurden 0,1 g 2,6-Di-tert.-butyl-4-methylphenol, 0,05 g Dibutylzinn-dilaurat (Desmorapid® Z, Bayer MaterialScience AG, Leverkusen, Deutschland) sowie und 213.07 g einer 27 %-igen Lösung von Tris(p-isocyanatophenyl)thiophosphat in Ethylacetat (Desmodur® RFE, Produkt der Bayer MaterialScience AG, Leverkusen, Deutschland) vorgelegt und auf 60 °C erwärmt. Anschließend wurden 42.37 g 2-Hydroxyethylacrylat zugetropft und die Mischung weiter auf 60 °C gehalten, bis der Isocyanatgehalt unter 0,1 % gesunken war. Danach wurde abgekühlt und im Vakuum das Ethylacetat vollständig entfernt. Das Produkt wurde als teilkristalliner Feststoff erhalten.

**Herstellung von Schreibmonomer 2 (2-({[3-(Methylsulfanyl)phenyl]carbamoyl}oxy)ethylprop-2-enoat):**

In einem 100 mL Rundkolben wurden 0,02 g 2,6-Di-tert.-butyl-4-methylphenol, 0,01 g Desmorapid® Z, 11.7 g 3-(Methylthio)phenylisocyanat vorgelegt und auf 60 °C erwärmt. Anschließend wurden 8.2 g 2-Hydroxyethylacrylat zugetropft und die Mischung weiter auf 60 °C gehalten, bis der Isocyanatgehalt unter 0,1 % gesunken war. Danach wurde abgekühlt. Das Produkt wurde als hellgelbe Flüssigkeit erhalten.

**Herstellung des Additivs 1 (Bis(2,2,3,3,4,4,5,5,6,6,7,7-dodecafluorheptyl)-(2,2,4-trimethylhexan-1,6-diyl)biscarbamat):**

In einem 2000 mL Rundkolben wurden 0,02 g Desmorapid® Z und 3,60 g 2,4,4-Trimethylhexane-1,6-diisocyanat (TMDI) vorgelegt und auf 70 °C erwärmt. Anschließend wurden 11,39 g 2,2,3,3,4,4,5,5,6,6,7,7-Dodecafluorheptan-1-ol zugetropft und die Mischung weiter auf 70 °C gehalten, bis der Isocyanatgehalt unter 0,1 % gesunken war. Danach wurde abgekühlt. Das Produkt wurde als farbloses Öl erhalten.

**Herstellung von Farbstoff 1**

15,0 g Natrium-bis(2-ethylhexyl)sulfosuccinat (bezogen von Aldrich) wurden in 350 ml Wasser bei 50 °C gelöst. 24,5 g des Farbstoffs der Formel

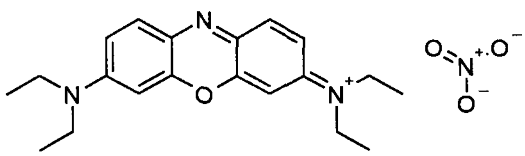

,

(Basic Blue 3, bezogen von DyStar), als 53 Gew.-%. Ware und 220 ml Essigsäurebutylester wurden zugesetzt und 4 h wurde bei 50 °C gerührt. Die wässrige Phase wurde abgetrennt und die organische Phase wurde dreimal mit 50 ml frischem Wasser bei 50 °C verrührt. Schließlich wurde jedes Mal die wässrige Phase abgetrennt, die letzte bei Raumtemperatur. Die tiefblaue organische Phase wurde durch azeotrope Destillation bei 150 mbar vom Restwasser befreit und auf ca. 120 g eingeengt. Durch Zusatz von wasserfreiem Butanon und Butylacetat wurden schließlich 250 g tiefblaue Lösung hergestellt, deren Lösungsmittelanteil zu gleichen Teilen aus diesen beiden Lösungsmitteln bestand. Sie war 9,68 Gew.-% an dem Farbstoff der Formel

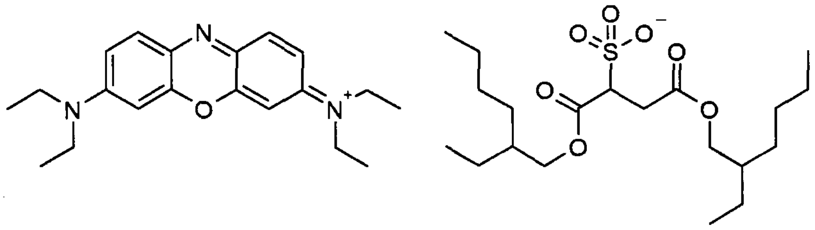

(96,4 % d. Th.).
Wassergehalt (KF): 0,1 %
$\lambda_{max}$ in Methanol: 643 nm.
Geeignete Laserwellenlänge: 633 nm.

Eindampfen der Lösung lieferte 24,2 g eines tiefblauen Glases, das allmählich in Form von goldglänzenden Prismen kristallisiert.

**Herstellung von Farbstoff 2**

In analoger Weise wurden 12,1 g Safranin O (Basic Red 2), das einer Mischung mit dem Farbstoff der Formel

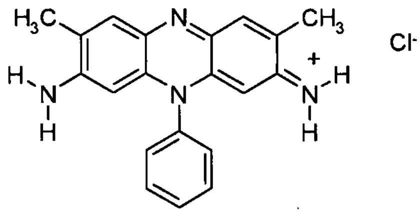

als Hauptkomponente entspricht (bezogen von Chemos GmbH, Deutschland, Art.-Nr. 1308), als 97 Gew.-%. Ware eingesetzt. Schließlich erhielt man 145 g tiefrote Lösung, deren Lösungsmittelanteil zu 35% aus Butanon und 65% aus Butylacetat bestand. Sie war 16,4 Gew.-% an dem Farbstoff der Formel

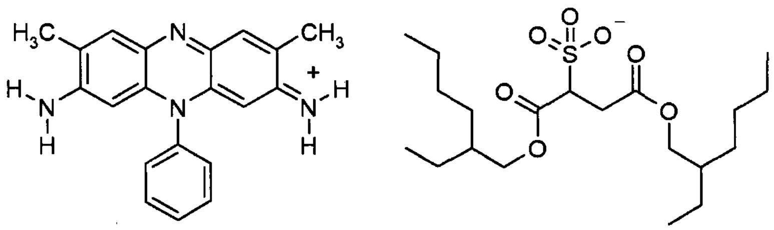

(96,3 % d. Th.).
Wassergehalt (KF): 0,1 %
$\lambda_{max}$ in Methanol: 628 nm.
Geeignete Laserwellenlänge: 532 nm.

**Herstellung von Farbstoff 3**

2,78 g Natrium-bis(2-ethylhexyl)sulfosuccinat (bezogen von Aldrich) wurden in 20 ml Essigsäureethylester gelöst. 2,20 g des Farbstoffs der Formel

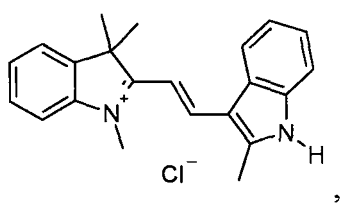
,

(Basic Orange 21, hergestellt nach H. Berneth, Methine Dyes and Pigments, Ullmann's Encyclopedia of Industrial Chemistry, Electronic Release, Chapter 6.4.3., Wiley-VCH, Weinheim April 2009), wurden zugesetzt. Die tieforange Mischung wurde 8 h bei 45 °C gerührt, auf Raumtemperatur abgekühlt und über einen Faltenfilter filtriert. Man erhielt eine tieforange Lösung, die zunächst durch azeotrope Destillation bei Normaldruck von eingeschlepptem Wasser befreit wurde und dann durch Zusatz von wasserfreiem Essigsäureethylester auf 23,0 g Masse eingestellt wurde. Sie war 20,0 Gew.-%. an dem Farbstoff der Formel

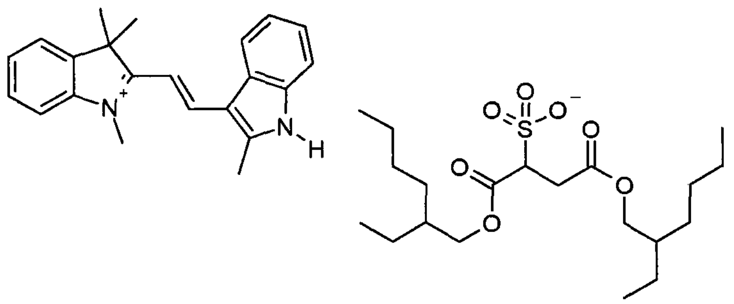

(99,5 % d. Th.).
Wassergehalt (KF): 0,04%
$\lambda_{max}$ in Methanol: 492 nm.
Geeignete Laserwellenlänge: 473 nm.

**Herstellung der Photopolymerschicht**

35,59% Polyol 1, 32,5% einer 1:1 Mischung aus Schreibmonomer 1 und Schreibmonomer 2, 22,5% Additiv 1, 0,07% Monobutylzinntris(2-Ethylhexanoat), 0,3% BYK 310 (Byk Gardner, Wesel, Deutschland), wurden miteinander innig vermischt. Dazu wurden eine 80%ige Ethylacetatlösung von 1,7% Coinitiators 1, 0,26% des Farbstoffs 1, 0,13% des Farbstoffs 2 und 0,13% des Farbstoff 3 gegeben und erneut innig vermischt. Anschließend wurden 6,82% Desmodur N3900 zugegeben und nach innigem Vermischen die Photopolymerkomposition mittels eines Rakelauftragverfahrens auf einer Beschichtungsanlage bei 1,2 m/min mit 16μm Naßschichtdicke auf eine 36μm PET Substratfolie appliziert. Nach dem Trocknen bei 85 °C wurde eine nicht klebende, ca 14,5μm dicke Photopolymerschicht erhalten, die mit einer 40μm PE Folie kaschiert wurde.

**Belichtung der Photopolymerschichten mit roten und grünen Testhologrammen**

Zur Herstellung der Testhologramme (siehe Figur 2) wurde der Strahl eines Lasers (Emissionswellenlänge 633 nm z.B. Larisis SNF, Fa Coherent 200mW, bzw. 532 nm z.B. RLTMGL-532, 50mW, Roithner Lasertechnik) mit Hilfe einer optionalen Aufweitungslinse (AF) und der Kollimationslinse (CL), die nach dem Shutter S platziert war auf einen Durchmesser von ~ 3 - 4 cm aufgeweitet. Der Durchmesser des aufgeweiteten Laserstrahls wurde dabei durch die Apertur des geöffneten Shutters bestimmt. Es wurde bewusst auf eine inhomogene Intensitätsverteilung des aufgeweiteten Laserstrahles geachtet. So betrug die Randintensität $P_R$ ~ nur die Hälfte der Intensität Pz im Zentrum des aufgeweiteten Laserstrahls. P war hier als Leistung/ Fläche zu verstehen. Der aufgeweitete Laserstrahl durchlief zunächst eine schräg zum Strahl gestellte Glasplatte, die als Shearing Plate (SP) diente. Anhand des nach oben gespiegelten Interferenzmusters, das von den zwei Glasoberflächenreflexen der SP erzeugt wurde, konnte erkannt werden, ob der Laser stabil im Single Mode emittiert. In diesem Fall ist auf einer über der SP platzierten Mattscheibe ein Muster aus dunklen und hellen Streifen zu sehen. Nur wenn Single Mode Emission gegeben war, wurden holographischen Belichtungen durchgeführt. Im Falle der DPSS Laser konnte der Single Mode durch Einstellen des Pumpstroms erreicht werden. Der aufgeweitete Strahl durchlief das etwa 15° schräg gestellte die als holographisches Medium (P) dienende Photopolymerschicht, dieser Teil bildete den Referenzstrahl, um dann vom zu P parallel angeordneten Objekt (O) wieder zurück in P reflektiert zu werden. Dieser Teil bildete dann den Signalstrahl der Denisyukanordnung.

Die Interferenz von Signal- und Referenzstrahl in P erzeugte das Hologramm in der Photopolymerschicht. O bestand aus einer mit weißem Papier bedeckten Metallplatte, wobei die Papierseite P zugewandt war. Auf dem Papier befand sich ein quadratisches Raster erzeugt durch schwarze Linien. Die Kantenlänge eines Quadrates betrug 0.5 cm. Dieses Raster wurde bei der holographischen Belichtung von P mit im Hologramm abgebildet.

Die mittlere Belichtungsdosis $E_{ave}$ wurde durch die Öffnungszeit $t$ von S eingestellt. Bei fixierter Laserleistung $I$ stellte $t$ daher die zu $E_{ave}$ proportionale Größe dar. Die Öffnungszeit für die Belichtungen wurde bei 633nm auf 1

Sekunde und bei 532nm auf 4 Sekunden eingestellt. Da der aufgeweitete Laserstrahl eine inhomogenene (glockenförmige) Intensitätsverteilung besaß, variierte die lokale Dosis *E* zur Erzeugung des Hologramms in P. Dies führte, zusammen mit der Schrägstellung von P und O zur optischen Achse dazu, dass das geschriebene Hologramm elliptische Form besaß, wie in Figur 3 dargestellt.

Die Folienmuster wurden für die Belichtung zunächst zugeschnitten, die PE-Kaschierfolie entfernt und mit per Hand auf eine Glasscheibe laminiert. Nach der Belichtung wurde zweimal bei einer Bandgeschwindigkeit von 2,5m/min unter eine UV-Lampe (Fusion UV 558434 KR 85, 80 W / cm2) das Testhologram inkohärent belichtet und gebleicht und damit photonisch fixiert.

## Herstellung der Schichtaufbauten

Alle Komponenten der Schutzschicht wurden in einem Speedmixer für eine Minute innig vermischt. Dabei wurde das Verlaufsadditiv zuletzt hinzugefügt. Die Mischungen waren nach dem Mischen leicht trüb. Anschließend wurde diese mit einem Rakel 30$\mu$m dick direkt auf die belichtete Photopolymerschicht mit dem Testhologramm aufgerakelt. Zum direkten Vergleich wurde dabei nur die Hälfte des Testhologramms abgedeckt. Anschließend wurde die strahlenhärtende Schicht bei 2,5m/min auf ein Transportband unter einer UV-Lampe (Typ Fusion UV 558434 KR 85, 80 W/cm2) vorbeigefahren und damit gehärtet. Der Schichtaufbau war dann trocken.

Die Schutzschichten der Beispiele enthielten, wie in Tabelle 1 angegeben, verschiedene strahlenhärtende Harze I), ein isocyanatfunktionelles Harz II), ein Photoinitiatorsystem III), sowie ein Verlaufshilfsmittel und ggf. einen Katalysator.

## Messung und Bewertung der Farbverschiebung

Die hergestellten Schichtaufbauten wurden jeweils mit einem Haftklebstoff-Klebeband auf Polyacrylatbasis (Riwo Elektroklebeband erhältlich von FLEXcon, Glenrothes, UK), bzw. mit Aceton und mit Ethylacetat behandelt. Dazu wurde das Haftklebstoffband auf Polyacrylatbasis bei Raumtemperatur auflaminiert bzw. Aceton und Ethylacetat als Flüssigkeiten wurden dagegen bei Raumtemperatur aufgetröpfelt. Dann ließ man für 5 Minuten einwirken. Anschließend wurde die Farbverschiebungen visuell beurteilt.

Die beste Note "1" wurde vergeben, wenn keine visuelle Veränderung des Hologramms unter der Schutzschicht zu beobachten war. Die schlechteste Note "6" wurde vergeben, wenn das rote Hologramm vollständig verschwunden war. Die folgende Tabelle beschreibt die visuellen Beurteilungen für grüne und rote Testhologramme im Detail:

| Note | Visuelle Beurteilung des roten Hologramms | Visuelle Beurteilung des grünen Hologramms |
|---|---|---|
| 1 | Keine Veränderung | Keine Veränderung. |
| 2 | Hologramm hat minimal an Helligkeit verloren | Hologramm zeigt leicht Farbveränderung nach grün-gelblich. |
| 3 | Hologramm hat an Helligkeit verloren | Hologramm ist grün-gelblich. |
| 4 | Hologramm hat stark an Helligkeit verloren | Note wird nicht vergeben. |
| 5 | Hologramm ist nur bei genauer Beobachtung mit einer Taschenlampe noch erkennbar | Hologramm ist orange. |
| 6 | Hologramm ist nicht mehr sichtbar | Note wird nicht vergeben. |

Die Ergebnisse der Messung und Bewertung der Farbverschiebung sind in Tabelle 2 dargestellt, wobei jeweils das arithmetische Mittel der sechs vergebenen Noten angegeben ist.

Weiterhin sind in Tabelle 2 die Resultate der GPC Analyse der strahlenhärtenden Harze I) wiedergegeben. Die Ergebnisse der GPC Analyse der isocyanatfunktionellen Harze II, sind unter "Einsatzstoffe" aufgeführt.

Für einen erfinderischen Schichtaufbau zeigt die visuelle Beurteilung nach Applikation von Haftklebstoff bzw. Lösemittel keine Veränderung am Hologramm oder nur einen minimalen Helligkeitsverlust (im roten Hologramm) bzw. eine leichte Farbveränderung (im grünen Hologramm) Erfinderische Schichtaufbauten weisen eine Note im arithmetischen Mittel von < 2 aus

**Bestimmung der Hafteigenschaften**

Für die Bestimmung der Hafteigenschaften der Schutzschicht wurde der Fünfschichtaufbau nach Figur 1 analysiert.

Zur Herstellung des Fünfschichtaufbaus nach Figur 1, wurde wie oben beschrieben ein Photopolymerschicht hergestellt und ein rotes bzw. grünes Hologramm einbelichtet. Dann wurde jeweils auf eine Photopolymerschicht eine der Schutzschichten gemäß der Beispiele 1-6 bzw. der vergleichenden Beispiele V1-V15 appliziert. Zuletzt wurde das Haftklebstoff-Klebeband bei Raumtemperatur auf die Schutzschicht laminiert.

Der Schichtaufbau bestand damit aus einem PET-Substrat (S1) **1** auf dem die Photopolymerschicht (PP) **2** lag. Darauf befand sich die Schutzschicht (UV) **3**, darüber die druckaktivierbare Klebstoffschicht (PSA) **4** und auf dieser wiederum die Substratfolie der druckaktivierbaren Klebstoffschicht (S2) **5**. Durch manuelles Ziehen an den beiden Substratschichten **1** und **5** wurde geprüft, mit welchem Kraftaufwand eine Trennung möglich war. Weiterhin wurde visuell untersucht, ob ein adhesiver oder kohäsiver Bruch vorlag. Dabei wurden die folgenden Varianten beobachtet: Adhesiver Bruch an den Grenzschichten zwischen S1-PP, PP-UV, UV-PSA und PSA-S2 sowie ein kohäsiver Bruch in S1, PP, UV, PSA und S2. Auch eine Kombination aller neun Möglichkeiten konnte beobachtet werden, wobei ein derartiges Hafteigenschaftsprofil zur Zerstörung / Zertrennung der dazwischen liegenden Schichten führte.

Weiterhin wurde die Haftkraft qualitativ beurteilt, dabei galt folgende Notation:

0=Haftung ist so stark, dass ein Trennen manuell nicht möglich ist.
1=Starker Kraftaufwand ist nötig, um den Schichtaufbau zu trennen.
2=Mittelstarker Kraftaufwand ist nötig, um den Schichtaufbau zu trennen.
3=Normalem Kraftaufwand genügt um die Schichten auseinander zu ziehen.
4=Man kann die Schichten mit Leichtigkeit auseinander ziehen
5=Die Schichten haften nicht aneinander

Die Haftungsprüfung erfolgte nach > 7 Tagen nach dem Herstellen des Schichtaufbaus. Wichtig für einen erfinderischen Schichtaufbau war, daß die Grenzfläche zwischen strahlenhärtende Schicht ("UV") und Photopolymerschicht ("PP") nicht getrennt werden konnte. Ein adhesiver Bruch zwischen PP-UV wurde deshalb als nicht akzeptabel und somit als nicht erfindungsgemäß beurteilt. Gewünschte erfindungsgemäße Hafteigenschaften sind ein köhasiver Bruch in PP oder PSA sowie ein adhäsiver Bruch zwischen S1-PP oder PSA-S2, da dann der Schichtverbund zwischen PP und UV intakt bleibt. Ebenfalls erfindungsgemäß ist eine Kombination aus verschiedenen adhesiven und/oder kohäsiven Brüchen, da dann ein Zerreissen des Schichtaufbaus erfolgt und ein Manipulieren des Aufbaus sichtbar wird. Voraussetzung für einen erfinderischen Schichtaufbau sind Haftkräfte mit der Beurteilung "0" und "1", da in diesem Fall eine Manipulation des Schichtaufbaus deutlich erschwert wird

Die Ergebnisse zu den Hafteigenschaften der erfindungsgegmäßen Beispiele 1-6 und Schichtaufbauten der vergleichenden Beispielen V1-V15 finden sich in Tabelle 3.

In Tabelle 3 ist ebenfalls neben der manuellen Prüfung der Haftkraft auch die Position des Haftversagen (dunkel markiert) im Schichtaufbau angegeben. Sind mehrere Positionen markiert, fand das Haftversagen an mehreren Stellen im Schichtaufbau statt. Dies führte zur Zerstörung des Gesamtaufbaus. Weiterhin findet sich eine qualitative Bewertung in Tabelle 3, die eine Aussage gibt, ob der Aufbau einer Manipulation durch Dritte (z.B. in einer Sicherheitsanwendung) standhält.

Erfindungsgemäße Schichtaufbauten erfüllen gleichzeitig folgende Bedingungen:

a) Keine visuell sichtbare Farbverschiebung, also eine geringe Farbverschiebung gekennnzeichnet mit einer Note besser als "2" (< 2) **und gleichzeitig**;

b) Beide Schichten haften gut aneinander, also eine Haftkraft von "0" oder "1" **und** kein adhäsiver Bruch zwischen Photopolymerschicht ("PP") und Schutzschicht ("UV").

Die vergleichenden Beispiele V1-V4 enthielten kein isocyanatfunktionelles Harz II) und hatten durchweg keine guten Hafteigenschaften (siehe Tabelle 3). V5 zeigte ebenfalls keine guten Hafteigenschaften. Die vergleichenden Beispiele V6-V15 zeigten eine zu hohe Farbverschiebung (siehe Tabelle 2) aber überwiegend gute Hafteigenschaften.

Nur die erfindungsgemäßen Schichtaufbauten der Beispiele 1-6 wiesen sowohl eine minimale, akzeptable Farbverschiebung (Tabelle 2) als auch gute Hafteigenschaften (Tabelle 3) auf.

Alle in den erfindungsgemäßen Beispielen 1-6 verwendeten strahlenhärtende Harze I) zeichnten sich durch aus, dass sie ≤ 5 Gew.-% Verbindungen mit einem gewichtsmittleren Molekulargewicht < 500 und ≥ 75 Gew.-% Verbindungen mit einem gewichtsmittleren Molekulargewicht > 1000 enthalten. Weiterhin wurde in den erfinderischen Schichtaufbauten der Beispiele 1-6 ein isocyanatfunktionelles Harz II) verwendet, dass ≤ 5 Gew.-% Verbindungen mit einem gewichtsmittleren Molekulargewicht < 500 enthielt

Tabelle 1:

| Versuch | Strahlenhärtendes Harz I) | Einwaage [g] | NCO-Harz II) | Einwaage [g] | Verlaufsmittel | Einwaage [g] | Photoinitiator III) | Einwaage [g] | Katalysator | Einwaage [g] |
|---|---|---|---|---|---|---|---|---|---|---|
| V1 | Harz 1 | 9 | | | BYK 310 | 0,27 | Irgacure 2022 | 0,45 | | |
| V2 | Harz 2 | 18 | | | BYK 310 | 0,54 | Irgacure 2022 | 0,9 | | |
| V3 | Harz 3 | 18 | | | BYK 310 | 0,54 | Irgacure 2022 | 0,9 | | |
| V4 | Harz 4 | 18 | | | BYK 310 | 0,54 | Irgacure 2022 | 0,9 | | |
| 1 | Harz 1 | 27 | Harz A | 3 | BYK 310 | 0,9 | Irgacure 2022 | 1,5 | Jeffkat ZF10 | 0,032 |
| 2 | Harz 2 | 27 | Harz A | 3 | BYK 310 | 0,9 | Irgacure 2022 | 1,5 | Jeffkat ZF10 | 0,032 |
| 3 | Harz 2 | 27 | Harz B | 3 | BYK 310 | 0,9 | Irgacure 2022 | 1,5 | | |
| 4 | Harz 3 | 27 | Harz A | 3 | BYK 310 | 0,9 | Irgacure 2022 | 1,5 | | |
| 5 | Harz 4 | 9 | Harz A | 1 | BYK 310 | 0,3 | Irgacure 2022 | 0,3 | | |
| 6 | Harz 3 | 27 | Harz B | 3 | BYK 310 | 0,9 | Irgacure 2022 | 1,5 | | |
| V5 | Harz 5 | 18 | Harz A | 2 | BYK 310 | 0,6 | Irgacure 2022 | 1 | | |
| V6 | Harz 6 | 18 | Harz A | 2 | BYK 310 | 0,6 | Irgacure 2022 | 1 | | |
| V7 | Harz 7 | 18 | Harz A | 2 | BYK 310 | 0,6 | Irgacure 2022 | 0,8 | | |
| V8 | Harz 8 | 18 | Harz A | 2 | BYK 310 | 0,6 | Irgacure 2022 | 1 | | |
| V9 | Harz 9 | 18 | Harz A | 2 | BYK 310 | 0,6 | Irgacure 2022 | 0,8 | | |
| V10 | Harz 10 | 18 | Harz A | 2 | BYK 310 | 0,6 | Irgacure 2022 | 0,8 | | |
| V11 | Harz 11 | 18 | Harz A | 2 | BYK 310 | 0,6 | Irgacure 2022 | 1 | | |
| V12 | Harz 12 | 18 | Harz A | 2 | BYK 310 | 0,6 | Irgacure 2022 | 1 | | |
| V13 | Harz 13 | 18 | Harz A | 2 | BYK 310 | 0,6 | Irgacure 2022 | 0,8 | | |
| V14 | Harz 14 | 18 | Harz A | 2 | BYK 310 | 0,6 | Irgacure 2022 | 1 | | |
| V15 | Harz 15 | 18 | Harz A | 2 | BYK 310 | 0,6 | Irgacure 2022 | 0,8 | | |

Tabelle 2:

| | | | | **Noten** | **Farbverschiebung rotes Hologramm** | | | **Farbverschiebung grünes Hologramm** | | |
|---|---|---|---|---|---|---|---|---|---|---|
| Beispiel | **Harz I)** | **Mw < 500 (g/Mol)** | **Mw >1000 (g/mol)** | AVR | **PSA** | **Aceton** | **Ethylacetat** | **PSA** | **Aceton** | **Ethylacetat** |
| V1 | Harz 1 | **2,87%** | **85,62%** | **1,0** | 1,0 | 1,0 | 1,0 | 1,0 | 1,0 | 1,0 |
| V2 | Harz 2 | **1,93%** | **79,01%** | **1,1** | 1,0 | 1,0 | 1,0 | 1,5 | 1,0 | 1,0 |
| V3 | Harz 3 | **3,21%** | **85,96%** | **1,3** | 2,0 | 1,0 | 1,0 | 1,5 | 1,0 | 1,0 |
| V4 | Harz 4 | **1,82%** | **95,51%** | **1,1** | 1,0 | 1,0 | 1,0 | 1,5 | 1,0 | 1,0 |
| 1 | Harz 1 | **2,87%** | **85,62%** | **1,0** | 1,0 | 1,0 | 1,0 | 1,0 | 1,0 | 1,0 |
| 2 | Harz 2 | **1,93%** | **79,01%** | **1,0** | 1,0 | 1,0 | 1,0 | 1,0 | 1,0 | 1,0 |
| 3 | Harz 2 | **1,93%** | **79,01%** | **1,0** | 1,0 | 1,0 | 1,0 | 1,0 | 1,0 | 1,0 |
| 4 | Harz 3 | **3,21%** | **85,96%** | **1,0** | 1,0 | 1,0 | 1,0 | 1,0 | 1,0 | 1,0 |
| 5 | Harz 4 | **1,82%** | **95,51%** | **1,0** | 1,0 | 1,0 | 1,0 | 1,0 | 1,0 | 1,0 |
| 6 | Harz 3 | **3,21%** | **85,96%** | **1,7** | 3,0 | 1,0 | 3,0 | 1,0 | 1,0 | 1,0 |
| V5 | Harz 5 | **2,22%** | **62,67%** | **1,5** | 1,0 | 1,0 | 1,0 | 2,0 | 2,0 | 2,0 |
| V6 | Harz 6 | 5,13% | **79,73%** | 2,0 | 2,0 | 2,0 | 2,0 | 2,0 | 2,0 | 2,0 |
| V7 | Harz 7 | 7,25% | 77,41% | 2,2 | 3,0 | 3,0 | 3,0 | 2,0 | 1,0 | 1,0 |
| V8 | Harz 8 | 8,21% | 57,60% | 2,5 | 3,0 | 3,0 | 3,0 | 2,0 | 2,0 | 2,0 |
| V9 | Harz 9 | **1,02%** | 73,84% | 2,5 | 3,0 | 3,0 | 3,0 | 2,0 | 2,0 | 2,0 |
| V10 | Harz 10 | 7,82% | **79,88%** | 2,7 | 3,0 | 5,0 | 5,0 | 1,0 | 1,0 | 1,0 |
| V11 | Harz 11 | 29,52% | 57,63% | 3,3 | 4,0 | 6,0 | 5,0 | 1,0 | 2,0 | 2,0 |
| V12 | Harz 12 | 11,84% | **82,05%** | 3,7 | 4,0 | 6,0 | 5,0 | 2,0 | 2,0 | 3,0 |
| V13 | Harz 13 | 16,67% | 51,57% | 4,3 | 5,0 | 5,0 | 5,0 | 3,5 | 3,5 | 3,5 |
| V14 | Harz 14 | 14,13% | **79,38%** | 4,6 | 5,0 | 5,0 | 6,0 | 4,0 | 4,0 | 3,5 |
| V15 | Harz 15 | 11,50% | 63,14% | 4,5 | 5,0 | 5,0 | 5,0 | 5,0 | 3,5 | 3,5 |

Tabelle 3

| | | | Haftung | | Schichtaufbau | | | | | | | | | | |
|---|---|---|---|---|---|---|---|---|---|---|---|---|---|---|---|
| | UV-Harz | NCO-Harz | Haftung | Bruch | S1 | S1-PP | PP | PP-UV | UV | UV-PSA | PSA | PSA-S2 | S2 | Ergebnis | Bewertung |
| V1 | Harz 1 | | 2 | UV-PSA | | | | | | | | | | PSA haftet schwach | Nein, weil zu schwach |
| V2 | Harz 2 | | 2 | UV-PSA | | | | | | | | | | PSA haftet schwach | Nein, weil zu schwach |
| V3 | Harz 3 | | 2 | UV-PSA | | | | | | | | | | PSA haftet schwach | Nein, weil zu schwach |
| V4 | Harz 4 | | 2 | S1-PP, UV-PSA, PSA-S2 | | | | | | | | | | Zerstörung von PP und UV | Ja, weil Aufbau zerstört wird |
| 1 | Harz 1 | Harz A | **1** | PSA | | | | | | | | | | Kohäsiver PSA Bruch | Ja, weil Schichtverbund intakt bleibt |
| 2 | Harz 2 | Harz A | **0-1** | PSA | | | | | | | | | | Kohäsiver PSA Bruch | Ja, weil Schichtverbund intakt bleibt |
| 3 | Harz 2 | Harz B | **1** | PSA | | | | | | | | | | Kohäsiver PSA Bruch | Ja, weil Schichtverbund intakt bleibt |
| 4 | Harz 3 | Harz A | **0-1** | PP-UV, PSA | | | | | | | | | | Kohäsiver PSA Bruch mit Einrissen in UV | Ja, weil Aufbau zerstört wird |
| 5 | Harz 4 | Harz A | **1** | PSA | | | | | | | | | | Kohäsiver PSA Bruch | Ja, weil Schichtverbund intakt bleibt |
| 6 | Harz 3 | Harz B | **1** | PSA, PSA-S2 | | | | | | | | | | Kohäsiver PSA Bruch mit Delamination von S2 | Ja, weil Schichtverbund intakt bleibt |
| V5 | Harz 5 | Harz A | 4 | UV-PSA | | | | | | | | | | PSA haftet nicht | Nein, weil zu schwach |

(fortgesetzt)

| | | | Haftung | | Schichtaufbau | | | | | | | | | | |
|---|---|---|---|---|---|---|---|---|---|---|---|---|---|---|---|
| | UV-Harz | NCO-Harz | Haftung | Bruch | S1 | S1-PP | PP | PP-UV | UV | UV-PSA | PSA | PSA-S2 | S2 | Ergebnis | Bewertung |
| V6 | Harz 6 | Harz A | 0 | S1-PP, PP-UV | | | | | | | | | | Zerstörung von PP | Ja, weil Aufbau zerstört |
| V7 | Harz 7 | Harz A | 2 | UV-PSA | | | | | | | | | | PSA haftet schwach | Nein, weil zu schwach |
| V8 | Harz 8 | Harz A | 0 | PSA | | | | | | | | | | Kohäsiver PSA Bruch | Ja, weil Schichtverbund intakt bleibt |
| V9 | Harz 9 | Harz A | 0-1 | S1-PP, PP-UV | | | | | | | | | | Zerstörung von PP | Ja, weil Aufbau zerstört |
| V10 | Harz 10 | Harz A | 1-2 | PP-UV, PSA | | | | | | | | | | Zerstörung von PP und PSA | Ja, weil Aufbau zerstört |
| V11 | Harz 11 | Harz A | 0 | S1-PP, PP-UV | | | | | | | | | | Zerstörung von PP | Ja, weil Aufbau zerstört |
| V12 | Harz 12 | Harz A | 0 | PSA | | | | | | | | | | Kohäsiver PSA Bruch | Ja, weil Schichtverbund intakt bleibt |
| V13 | Harz 13 | Harz A | 0 | PSA | | | | | | | | | | Kohäsiver PSA Bruch | Ja, weil Schichtverbund intakt bleibt |
| V14 | Harz 14 | Harz A | 0 | PSA | | | | | | | | | | Kohäsiver PSA Bruch | Ja, weil Schichtverbund intakt bleibt |
| V15 | Harz 15 | Harz A | 0 | PSA | | | | | | | | | | Kohäsiver PSA Bruch | Ja, weil Schichtverbund intakt bleibt |

## Patentansprüche

1. Schichtaufbau mit einer Schutzschicht und einer belichteten Photopolymerschicht, wobei die Schutzschicht durch Umsetzung wenigstens eines strahlungshärtenden Harzes I), eines Isocyanat-funktionellen Harzes II) und eines Photoinitiatorsystem III) erhältlich ist und in dem strahlenhärtenden Harz I) ≤ 5 Gew.-% Verbindungen mit einem gewichtsmittleren Molekulargewicht < 500 und ≥ 75 Gew.-% Verbindungen mit einem gewichtsmittleren Molekulargewicht > 1000 enthalten sind, in dem Isocyanat-funktionellen Harz II) ≤ 5 Gew.-% Verbindungen mit einem gewichtsmittleren Molekulargewicht < 500 enthalten sind und in der Schutzschicht mindestens zu 80 Gew.-% das strahlenhärtende Harze I) und maximal zu 15 Gew.-% das isocyanatfunktionelle Harze II) enthalten sind.

2. Schichtaufbau nach Anspruch 1, **dadurch gekennzeichnet, dass** die Photopolymerschicht vernetzte Matrixpolymere A), erhältlich durch Umsetzung wenigstens einer Polyisocyanat-Komponente a) und einer Isocyanat reaktiven-Komponente b), vernetzte Schreibmonomere B), einen Photoinitiator C) und einen Katalysator D) enthält.

3. Schichtaufbau nach einem der Ansprüche 1 oder 2, **dadurch gekennzeichnet, dass** das strahlenhärtende Harz I) wenigstens ein polyester-, polyether-, polycarbonat- und / oder polyurethanhaltiges Bindemittel mit radikalisch polymerisierbaren Gruppen umfasst, wobei es sich bei den radikalisch polymerisierbaren bevorzugt um Acryl-, Methacryl-, Allyl-, Vinyl-, Maleinyl- und / oder Fumarylgruppen, besonders bevorzugt um Acryl- und / oder Methacrylgruppen und ganz besonders bevorzugt um Acrylgruppen handeln kann.

4. Schichtaufbau nach einem der Ansprüche 1 bis 3, **dadurch gekennzeichnet, dass** das strahlenhärtende Harz I) wenigstens ein Verbindung aus der Gruppe der Polyetheracrylate, Polyesteracrylate, aliphatische Urethanacrylate, aromatische Urethanacrylate und Epoxyacrylate und bevorzugt wenigstens ein aliphatisches Urethanacrylat und / oder wenigstens ein aromatisches Urethanacrylat enthält.

5. Schichtaufbau nach einem der Ansprüche 1 bis 4, **dadurch gekennzeichnet, dass** in dem strahlenhärtenden Harz I) ≤ 4 Gew.-% Verbindungen mit einem gewichtsmittleren Molekulargewicht < 500 und ≥ 77 Gew.-% Verbindungen mit einem gewichtsmittleren Molekulargewicht > 1000 und bevorzugt ≤ 3,5 Gew.-% Verbindungen mit einem gewichtsmittleren Molekulargewicht < 500 und ≥ 79 Gew.-% Verbindungen mit einem gewichtsmittleren Molekulargewicht > 1000 enthalten sind.

6. Schichtaufbau nach einem der Ansprüche 1 bis 5, **dadurch gekennzeichnet, dass** das isocyanatfunktionelle Harz II) wenigstens ein aliphatisches, araliphatisches, aliphatisches oder aromatischea isocyanathaltiges Bindemittel umfasst.

7. Schichtaufbau nach Anspruch 6, **dadurch gekennzeichnet, dass** Isocyanat-haltige Bindemittel ein Isocyanat-funktionelles Prepolymer ist, das bevorzugt durch Umsetzung eines multifunktionellen Alkohols mit einem Überschuss Diisocyanat erhältlich ist.

8. Schichtaufbau nach einem der Ansprüche 1 bis 7, **dadurch gekennzeichnet, dass** das isocyanatfunktionelle Harz II) zusätzlich (Meth)acrylatgruppen aufweist.

9. Schichtaufbau nach einem der Ansprüche 1 bis 8, **dadurch gekennzeichnet, dass** in dem isocyanatfunktionellen Harz II) ≤ 4 Gew.-% und besonders bevorzugt ≤ 3 Gew.-% Verbindungen mit einem gewichtsmittleren Molekulargewicht < 500 enthalten sind.

10. Schichtaufbau nach einem der Ansprüche 1 bis 9, **dadurch gekennzeichnet, dass** in der Schutzschicht ≥ 3 Gew.-% und ≤ 15 Gew.-%, bevorzugt ≥ 5 Gew.-% und ≤ 15 Gew.-% und besonders bevorzugt ≥ 8 Gew.-% und ≤ 12 Gew.-% des isocyanatfunktionellen Harzes II) enthalten sind.

11. Schichtaufbau nach einem der Ansprüche 1 bis 10, **dadurch gekennzeichnet, dass** das Photoinitiatorsystem III) wenigstens eine Verbindung aus der Gruppe 2-Hydroxyphenylketone, insbesondere 1-Hydroxycyclohexyl-phenylketon, Benzilketale, insbesondere Benzildimethylketal, Acylphospinoxide, insbesondere Bis-(2,4,6-trimethylbenzoyl)-phenylphosphinoxid, Diacylphosphinoxide, Benzophenon und dessen Derivate umfasst.

12. Schichtaufbau nach einem der Ansprüche 1 bis 11, **dadurch gekennzeichnet, dass** die Schreibmonomere B) photochemisch vernetzte Acrylate sind.

**13.** Schichtaufbau nach einem der Ansprüche 1 bis 12, **dadurch gekennzeichnet, dass** die Photopolymerschicht Additive der allgemeinen Formel (VII)

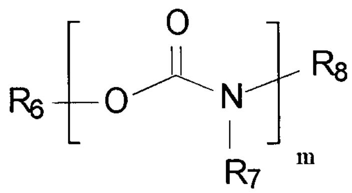

(VII)

enthält, in der m≥1 und m≤8 ist und $R^6$, $R^7$, $R^8$ unabhängig voneinander Wasserstoff, lineare, verzweigte, cyclische oder heterocyclische unsubstituierte oder gegebenenfalls auch mit Heteroatomen substituierte organische Reste sind, wobei bevorzugt mindestens einer der Reste $R^6$, $R^7$, $R^8$ mit wenigstens einem Fluoratom substituiert ist und besonders bevorzugt $R^6$ ein organischer Rest mit mindestens einem Fluoratom ist.

**14.** Schichtaufbau nach einem der Ansprüche 1 bis 13, **dadurch gekennzeichnet, dass** in die Photopolymerschicht ein Hologramm einbelichtet ist.

**15.** Verfahren zur Herstellung eines Schichtaufbaus nach einem der Ansprüche 1 bis 14, **dadurch gekennzeichnet, daß** auf die belichtete Photopolymerschicht eine Mischung wenigstens umfassend das strahlungshärtende Harze I), das Isocyanat-funktionelle Harzes II) und das Photoinitiatorsystem III) aufgebracht und ausgehärtet wird.

**16.** Verwendung des Schichtaufbaus nach einem der Ansprüche 1 bis 14 in einem Etikett, in einer Sicherheitskarte, in einer Banknote, in einem Druckartikel, in einem optischen Aufbau, in einem elektronischen Display bevorzugt umfassend mindestens einem Hologramm, daß in der Photopolymerschicht einbelichtet wurde.

## Claims

**1.** Laminate structure comprising a protective layer and an exposed photopolymer layer, the protective layer being obtainable by reacting at least one radiation-curing resin I), an isocyanate-functional resin II) and a photoinitiator system III), and the radiation-curing resin I) containing ≤ 5% by weight of compounds having a weight-average molecular weight of < 500 and ≥ 75% by weight of compounds having a weight-average molecular weight of > 1000, the isocyanate-functional resin II) containing ≤ 5% by weight of compounds having a weight-average molecular weight of < 500, and the protective layer containing the radiation-curing resin I) at least to an extent of 80% by weight and the isocyanate-functional resin II) at most to an extent of 15% by weight.

**2.** Laminate structure according to Claim 1, **characterized in that** the photopolymer layer comprises crosslinked matrix polymers A) obtainable by reacting at least one polyisocyanate component a) and an isocyanate-reactive component b), crosslinked writing monomers B), a photoinitiator C) and a catalyst D).

**3.** Laminate structure according to either of Claims 1 and 2, **characterized in that** the radiation-curing resin I) comprises at least one polyester-, polyether-, polycarbonate- and/or polyurethane-containing binder having free-radically polymerizable groups, the free-radically polymerizable groups preferably being acryloyl, methacryloyl, allyl, vinyl, maleyl and/or fumaryl groups, more preferably acryloyl and/or methacryloyl groups and most preferably acryloyl groups.

**4.** Laminate structure according to any of Claims 1 to 3, **characterized in that** the radiation-curing resin I) comprises at least one compound from the group of the polyether acrylates, polyester acrylates, aliphatic urethane acrylates, aromatic urethane acrylates and epoxy acrylates, and preferably at least one aliphatic urethane acrylate and/or at least one aromatic urethane acrylate.

**5.** Laminate structure according to any of Claims 1 to 4, **characterized in that** the radiation-curing resin I) contains ≤ 4% by weight of compounds having a weight-average molecular weight of < 500 and ≥ 77% by weight of compounds having a weight-average molecular weight of > 1000 and preferably ≤ 3.5% by weight of compounds having a weight-average molecular weight of < 500 and ≥ 79% by weight of compounds having a weight-average molecular weight of > 1000.

**6.** Laminate structure according to any of Claims 1 to 5, **characterized in that** the isocyanate-functional resin II) comprises at least one aliphatic, araliphatic, aliphatic or aromatic isocyanate-containing binder.

**7.** Laminate structure according to Claim 6, **characterized in that** the isocyanate-containing binder is an isocyanate-functional prepolymer preferably obtainable by reaction of a polyfunctional alcohol with an excess of diisocyanate.

**8.** Laminate structure according to any of Claims 1 to 7, **characterized in that** the isocyanate-functional resin II) additionally has (meth)acrylate groups.

**9.** Laminate structure according to any of Claims 1 to 8, **characterized in that** the isocyanate-functional resin II) contains ≤ 4% by weight and more preferably ≤ 3% by weight of compounds having a weight-average molecular weight of < 500.

**10.** Laminate structure according to any of Claims 1 to 9, **characterized in that** the protective layer contains ≥ 3% by weight and ≤ 15% by weight, preferably ≥ 5% by weight and ≤ 15% by weight and more preferably ≥ 8% by weight and ≤ 12% by weight of the isocyanate-functional resin II).

**11.** Laminate structure according to any of Claims 1 to 10, **characterized in that** the photoinitiator system III) comprises at least one compound from the group of 2-hydroxyphenyl ketones, especially 1-hydroxycyclohexyl phenyl ketone, benzil ketals, especially benzil dimethyl ketal, acylphosphine oxides, especially bis(2,4,6-trimethylbenzoyl)phenylphosphine oxide, diacylphosphine oxides, benzophenone and derivatives thereof.

**12.** Laminate structure according to any of Claims 1 to 11, **characterized in that** the writing monomers B) are photochemically crosslinked acrylates.

**13.** Laminate structure according to any of Claims 1 to 12, **characterized in that** the photopolymer layer comprises additives of the general formula (VII)

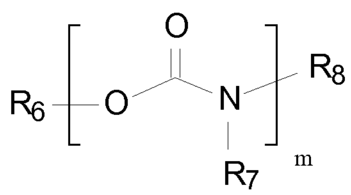

(VII)

in which m ≥ 1 and m ≤ 8 and $R^6$, $R^7$, $R^8$ are each independently hydrogen, linear, branched, cyclic or heterocyclic organic radicals which are unsubstituted or optionally substituted, including by heteroatoms, where preferably at least one of the $R^6$, $R^7$, $R^8$ radicals is substituted by at least one fluorine atom and more preferably $R^6$ is an organic radical having at least one fluorine atom.

**14.** Laminate structure according to any of Claims 1 to 13, **characterized in that** a hologram has been incorporated by exposure into the photopolymer layer.

**15.** Process for producing a laminate structure according to any of Claims 1 to 14, **characterized in that** a mixture at least comprising the radiation-curing resin I), the isocyanate-functional resin II) and the photoinitiator system III) is applied to the exposed photopolymer layer and cured.

**16.** Use of the laminate structure according to any of Claims 1 to 14 in a label, in a security card, in a banknote, in a printed article, in an optical structure, in an electronic display, preferably comprising at least one hologram which has been incorporated by exposure in the photopolymer layer.

## Revendications

**1.** Structure stratifiée, comportant une couche protectrice et une couche de photopolymère insolée, la couche protectrice pouvant être obtenue par mise en réaction d'au moins une résine durcissable par irradiation I), d'une résine à

fonction isocyanate II) et d'un système photoamorceur III) et dans la résine durcissable par irradiation I) étant contenus ≤ 5 % en poids de composés ayant une masse moléculaire moyenne en poids < 500 et ≥ 75 % en poids de composés ayant une masse moléculaire moyenne en poids > 1 000, dans la résine à fonction isocyanate II) étant contenus ≥ 5 % en poids de composés ayant une masse moléculaire moyenne en poids < 500 et dans la couche protectrice étant contenues au moins à raison de 80 % en poids la résine durcissable par irradiation I) et au maximum à raison de 15 % en poids la résine à fonction isocyanate II).

**2.** Structure stratifiée selon la revendication 1, **caractérisée en ce que** la couche de photopolymère contient des polymères de matrice A) réticulés, pouvant être obtenus par mise en réaction d'au moins un composant polyisocyanate a) et d'un composant b) réactif avec des isocyanates, des monomères d'écriture B) réticulés, un photoamorceur C) et un catalyseur D).

**3.** Structure stratifiée selon l'une quelconque des revendications 1 et 2, **caractérisée en ce que** la résine durcissable par irradiation I) comprend au moins un liant à groupes polymérisables par voie radicalaire, contenant des polyesters, polyéthers, polycarbonates et/ou polyuréthanes, les groupes polymérisables par voie radicalaire pouvant consister de préférence en des groupes acryloyle, méthacryloyle, allyle, vinyle, maléyle et/ou fumaryle, de façon particulièrement préférée en des groupes acryloyle et/ou méthacryloyle, et de façon tout particulièrement préférée en des groupes acryloyle.

**4.** Structure stratifiée selon l'une quelconque des revendications 1 à 3, **caractérisée en ce que** la résine durcissable par irradiation I) contient au moins un composé choisi dans le groupe des polyétheracrylates, polyesteracrylates, uréthane-acrylate aliphatiques, uréthane-acrylates aromatiques et époxyacrylates et de préférence au moins un uréthane-acrylate aliphatique et/ou au moins un uréthane-acrylate aromatique.

**5.** Structure stratifiée selon l'une quelconque des revendications 1 à 4, **caractérisée en ce que** dans la résine durcissable par irradiation I) sont contenus ≤ 4 % en poids de composés ayant une masse moléculaire moyenne en poids < 500 et ≥ 77 % en poids de composés ayant une masse moléculaire moyenne en poids > 1 000 et de préférence ≤ 3,5 % en poids de composés ayant une masse moléculaire moyenne en poids < 500 et ≥ 79 % en poids de composés ayant une masse moléculaire moyenne en poids > 1 000.

**6.** Structure stratifiée selon l'une quelconque des revendications 1 à 5, **caractérisée en ce que** la résine à fonction isocyanate II) comprend au moins un liant contenant un isocyanate, aliphatique, araliphatique ou aromatique.

**7.** Structure stratifiée selon la revendication 6, **caractérisée en ce que** le liant contenant un isocyanate est un prépolymère à fonction isocyanate, qui peut être obtenu de préférence par mise en réaction d'un alcool polyhydrique avec un excès de diisocyanate.

**8.** Structure stratifiée selon l'une quelconque des revendications 1 à 7, **caractérisée en ce que** la résine à fonction isocyanate II) comprend en outre des groupes (méth) acrylate.

**9.** Structure stratifiée selon l'une quelconque des revendications 1 à 8, **caractérisée en ce que** dans la résine à fonction isocyanate II) sont contenus ≤ 4 % en poids et de façon particulièrement préférée ≤ 3 % en poids de composés ayant une masse moléculaire moyenne en poids < 500.

**10.** Structure stratifiée selon l'une quelconque des revendications 1 à 9, **caractérisée en ce que** dans la couche protectrice sont contenus ≥ 3 % en poids et ≥ 15 % en poids, de préférence ≥ 5 % en poids et ≤ 15 % en poids et de façon particulièrement préférée ≥ 8 % en poids et ≤ 12 % en poids de la résine à fonction isocyanate II).

**11.** Structure stratifiée selon l'une quelconque des revendications 1 à 10, **caractérisée en ce que** le système photoamorceur III) comprend au moins un composé choisi dans le groupe constitué par les 2-hydroxy-phénylcétones, en particulier la 1-hydroxycyclohexyl-phényl-cétone, les benzilcétals, en particulier le benzildiméthylcétal, les oxydes d'acylphosphines, en particulier l'oxyde de bis-(2,4,6-triméthylbenzoyl)-phénylphosphine, les oxydes de diacylphosphines, la benzophénone et ses dérivés.

**12.** Structure stratifiée selon l'une quelconque des revendications 1 à 11, **caractérisée en ce que** les monomères d'écriture B) sont des acrylates réticulés photochimiquement.

**13.** Structure stratifiée selon l'une quelconque des revendications 1 à 12, **caractérisée en ce que** la couche de photopolymère contient des additifs de formule générale (VII)

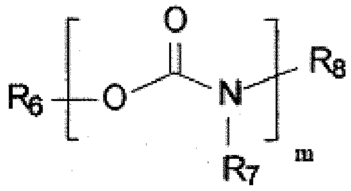

(VII)

dans laquelle m est ≥ 1 et m est ≤ 8 et $R^6$, $R^7$, $R^8$ représentent chacun indépendamment un atome d'hydrogène, des radicaux organiques linéaires, ramifiés, cycliques ou hétérocycliques, non substitués ou éventuellement également substitués par des hétéroatomes, de préférence au moins l'un des radicaux $R^6$, $R^7$, $R^8$ étant substitué par au moins un atome de fluor et de façon particulièrement préférée $R^6$ étant un radical organique comportant au moins un atome de fluor.

**14.** Structure stratifiée selon l'une quelconque des revendications 1 à 13, **caractérisée en ce qu'**un hologramme est enregistré dans la couche de photopolymère.

**15.** Procédé pour la production d'une structure stratifiée selon l'une quelconque des revendications 1 à 14, **caractérisé en ce que** sur la couche de photopolymère insolée on applique et fait durcir un mélange au moins comprenant la résine durcissable par irradiation I), la résine à fonction isocyanate II) et le système photoamorceur III).

**16.** Utilisation de la structure stratifiée selon l'une quelconque des revendications 1 à 14 dans une étiquette, dans une carte de sécurité, dans un billet de banque, dans un article d'impression, dans une structure optique, dans un afficheur électronique de préférence comprenant au moins un hologramme qui a été enregistré dans la couche de photopolymère.

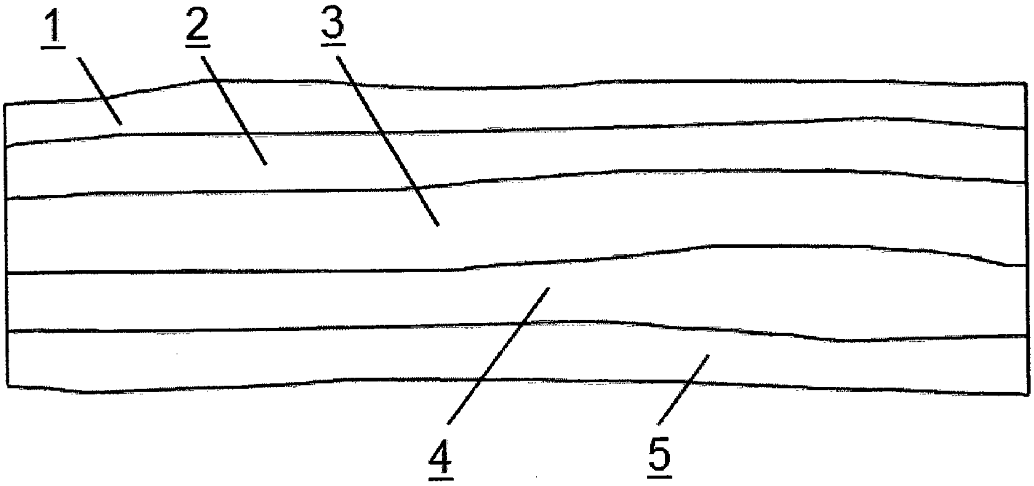


Figur 1:

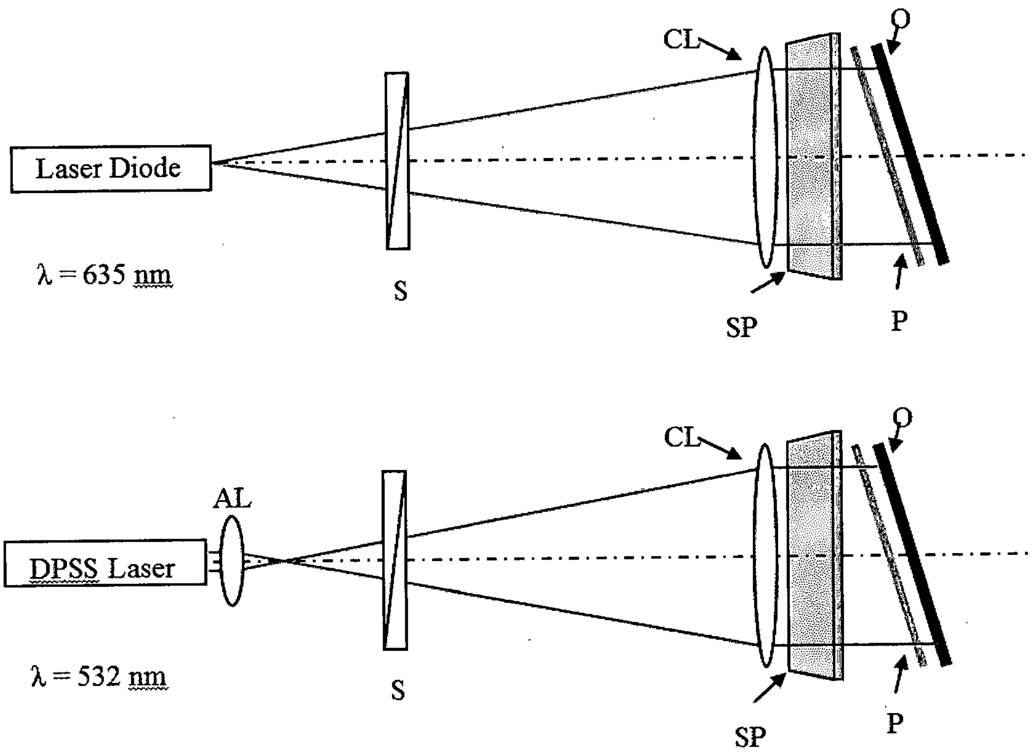


Figur 2:

Figur 2 zeigt die Messanordnung zur Prüfung der holographischen Eigenschaften für Wellenlängen von 635 und 532 nm.

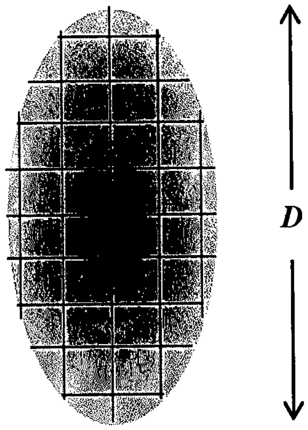


**Figur 3:**

Figur 3 zeigt die elliptische Form eines unter Figur 2 geschriebenen Hologramms.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2011054797 A
- WO 2011067057 A
- DE 69937920 T2
- EP 0223587 A
- DE 000019834360 A1
- EP 000000900778 B1
- DE 102007037140 A1
- DE 19944156 A1
- DE 10143630 A1
- DE 102004048873 A1
- DE 102009008569 A1
- DE 102009037009 A1
- DE 102009010069 A1


### In der Beschreibung aufgeführte Nicht-Patentliteratur


- **CUNNINGHAM et al.** *RadTech'98 North America UV/EB Conference Proceedings, Chicago,* 19. April 1998
- **KUTAL et al.** *Macromolecules,* 1991, vol. 24, 6872
- **YAMAGUCHI et al.** *Macromolecules,* 2000, vol. 33, 1152
- **NECKER et al.** *Macromolecules,* 2000, vol. 33, 7761
- **LI et al.** *Polymeric Materials Science and Engineering,* 2001, vol. 84, 139
- **DEKTAR et al.** *J. Org. Chem.,* 1990, vol. 55, 639
- *J. Org. Chem.,* 1991, vol. 56, 1838
- **CRIVELLO et al.** *Macromolecules,* 2000, vol. 33, 825
- **GU et al.** *Am. Chem. Soc. Polymer Preprints,* 2000, vol. 41 (2), 1266
- **HUA et al.** *Macromolecules,* 2001, vol. 34, 2488-2494
- Chemistry & Technology of UV & EB Formulations For Coatings, Inks & Paints. SITA Technology, 1991, vol. 3, 61-328
- **H. BERNETH.** Ullmann's Encyclopedia of Industrial Chemistry, Cationic Dyes. Wiley-VCH Verlag, 2008
- **H. BERNETH.** Ullmann's Encyclopedia of Industrial Chemistry, Azine Dyes. Wiley-VCH Verlag
- **H. BERNETH.** Ullmann's Encyclopedia of Industrial Chemistry, Methine Dyes and Pigments. Wiley-VCH Verlag, 2008
- **T. GESSNER ; U. MAYER.** Ullmann's Encyclopedia of Industrial Chemistry, Triarylmethane and Diarylmethane Dyes. Wiley-VCH Verlag, 2000
- J. Comput. Aid. Mol. Des. Virtual Computational Chemistry Laboratory, 2005, vol. 19, 453
- Chemistry & Technology of UV & EB Formulations For Coatings, Inks & Paints. SITA Technology, 1991, vol. 3, 61-325
- **H. BERNETH.** Methine Dyes and Pigments, Ullmann's Encyclopedia of Industrial Chemistry, Electronic Release. Wiley-VCH, April 2009